# EUROPÄISCHE PATENTSCHRIFT

(11) **EP 1 367 958 B1**
(45) Veröffentlichungstag und Bekanntmachung des Hinweises auf die Patenterteilung: **07.11.2007**
(21) Anmeldenummer: 01931519.1
(22) Anmeldetag: 14.03.2001
(51) Int. Cl.: A61C 17/22

(54) **VORRICHTUNG ZUR ZAHNREINIGUNG**
DEVICE FOR CLEANING TEETH
DISPOSITIF POUR LE BROSSAGE DES DENTS

(43) Veröffentlichungstag der Anmeldung: 10.12.2003
(60) Teilanmeldung: 07011252.9
(73) Patentinhaber: Braun GmbH, 61476 Kronberg (DE)
(72) Erfinder: HILSCHER, Alexander, 61476 Kronberg (DE); MANNEBACH, Horst, 56294 Münstermaifeld (DE); REICK, Hansjörg, 61449 Steinbach (DE); SCHWARZ-HARTMANN, Armin, 55234 Wendelsheim (DE); TRAWINSKI, Peter, 64331 Weiterstadt (DE); STRATMANN, Martin, 60318 Frankfurt (DE); VORBECK, Wolfgang, 65510 Idstein-Eschenhahn (DE)
(86) Internationale Anmeldenummer: PCT/EP2001/002844
(87) Internationale Veröffentlichungsnummer: WO 2002/071970

(56) Entgegenhaltungen:
- DE-A- 19 627 752
- US-A- 5 184 959
- US-A- 5 561 881
- US-A- 5 943 723
- US-B1- 6 193 510

## Beschreibung

Die vorliegende Erfindung betrifft eine Vorrichtung zur Zahnreinigung mittels einer elektrischen Zahnputzvorrichtung, an deren Handteil verschiedene Putzwerkzeuge für die individuelle Zahnreinigung der Benutzer der Zahnputzvorrichtung angekuppelt werden. Die Erfindung betrifft ferner das Handteil einer elektrischen Zahnputzvorrichtung, insbesondere - bürste, das ein Kupplungsteil zum Ankuppeln verschiedener Putzwerkzeuge, einen Antrieb zum Antreiben des jeweils angekuppelten Putzwerkzeugs, sowie eine Steuereinrichtung besitzt. Auch betrifft die Erfindung die Putzwerkzeuge, insbesondere Aufsteckbürsten für ein solches Handteil.

Eine Vorrichtung nach dem Oberbegriff von Anspruch 1 oder Anspruch 22 ist bereits aus der US 6193510 B1 bekannt. Diese Druckschrift befaßt sich mit einer Vorrichtung zur Beaufschlagung von dentalem Füllmaterial zum Ausbessern der Zähne mit das Füllmaterial aushärtendem Licht. Insoweit ist ein austauschbarer Lichtleiter vorgesehen, der auf ein Handstück aufsetzbar ist und mit dem die zu behandelnden Bereiche des mit Füllmaterial versehenen Zahnes mit Licht beaufschlagt werden, um das Aushärten der Füllmasse zu beschleunigen. Derartige austauschbare Lichtleiter sind nur ungenügend zu sterilisieren, so daß die Notwendigkeit besteht, dem Benutzer dieser Vorrichtung mitzuteilen, daß der austauschbare Lichtleiter ersetzt werden soll. Hierzu ist auf dem austauschbaren Lichtleiter ein Barcode vorgesehen, der beim Aufstecken des Lichtleiters auf das Handstück von dem Lesegerät am Handstück detektiert wird. Handelt es sich um einen erstmals erfaßten "neuen" Code, so wird ein Timer aktiviert, der dann die Benutzungszeiten dieses mit dem neuen Code versehenen Lichtleiters aufaddiert und nach der maximalen Benutzungszeit das Handstück ausschaltet. Das Handstück läßt sich erst dann wieder einschalten, wenn ein weiterer austauschbarer Lichtleiter mit einem anderen neuen Code eingesetzt wird. Wird ein Lichtleiter mit einem bereits vorher erfaßten Code erneut auf das Handstück gesteckt, wird überprüft, ob die zulässige Benutzungszeit bereits erreicht ist oder nicht. Sofern die zulässige maximale Benutzungszeit noch nicht erreicht ist, kann das Gerät solange mit diesem Lichtleiter weiter betrieben werden, bis die maximal vorgegebene Benutzungszeit erreicht ist, wonach dann erneut das Handstück in den Aus-Zustand versetzt wird. Grundgedanke der Vorrichtung nach der US 6193510 B1 ist es also, die Nutzungszeitdauer des mit dem Benutzer in Kontakt kommenden austauschbaren Element zu messen und aufzuaddieren, um nach Ablauf einer maximalen Benutzungszeitdauer zu signalisieren, daß das Element auszutauschen ist. Weiterhin finden sich in dieser Druckschrift auch Hinweise, daß ähnliche Überlegungen auf andere medizinische Geräte mit austauschbaren benutzerspezifischen Elementen Anwendung finden. Als Beispiel sind elektrische Zahnbürsten und Mundduschendüsen erwähnt.

Zahnputzvorrichtungen wie elektrische Zahnbürsten oder elektrische Mundduschen besitzen in der Regel ein Griffstück bzw. ein Handteil, auf dem verschiedene Putzwerkzeuge wie Aufsteckbürsten aufsteckbar sind, so daß mehrere Benutzer mit jeweils personenbezogenen Putzwerkzeugen die Zahnputzvorrichtung nutzen können. Solche elektrischen Zahnbürsten sind zum Beispiel aus der DE 19627752 A1 oder der EP 0624079 B1 bekannt. Um die Zahnreinigung den Wünschen und Bedürfnissen der Benutzer anzupassen, kann der jeweilige Benutzer Zahnreinigungsparameter wie zum Beispiel die Stärke des Wasserstrahls bei Mundduschen oder die Geschwindigkeit der Aufsteckbürsten elektrischer Zahnbürsten individuell einstellen.

Aus der DE 299 15 858 U1 ist eine Zahnputzvorrichtung bekannt, bei der jede der verschiedenen Zahnbürsten nur jeweils an einer bestimmten Einstecköffnung einer Konsole angeschlossen werden kann. Dadurch läuft dann das für diese spezielle Zahnbürste vorgesehene Programm ab. Allerdings ist es insbesondere für Kinder mühsam, die für die personenbezogene Zahnbürste vorgesehene individuelle Einstecköffnung zu finden und den Stecker dort zu adaptieren. Außerdem ist diese Konsole herstellungstechnisch sehr aufwendig, da zum einen eine Vielzahl unterschiedlicher Einstecköffnungen vorzusehen sind, wobei auch jede der Zahnbürsten einen unterschiedlichen, der jeweiligen Einstecköffnung zugeordneten Stecker aufzuweisen hat.

Bei einer weiteren Vorrichtung nach US 5184959 ist jeder Handzahnbürste in einer Konsole ein eigener Einsteckschlitz zugeordnet, so daß jeder Zahnbürste durch die Konsole ein individuelles Putzzeitsignal zugeordnet werden kann. Diese Anordnung ist herstellungstechnisch sehr aufwendig, wobei benutzerspezifische Daten des Zahnputzvorganges nicht erfaßt und gespeichert werden können.

Solche Zahnputzvorrichtungen sind in mehrerer Hinsicht verbesserungsfähig. Insbesondere ist es wünschenswert, die mögliche Anpassung an die Benutzer sowie die Benutzerfreundlichkeit weiter zu verbessern.

Der vorliegenden Erfindung liegt daher die Aufgabe zugrunde, eine verbesserte Vorrichtung zur Reinigung von Zähnen, ein verbessertes Handteil einer elektrischen Zahnputzvorrichtung und/oder verbesserte Putzwerkzeuge hierfür zu schaffen, die die Zahnreinigung gegenüber dem Stand der Technik weiterbilden und weitere Vorteile erzielen. Insbesondere soll die Anpassung an die verschiedenen Benutzer sowie die Benutzerfreundlichkeit weiter verbessert werden.

Hinsichtlich der vorrichtungstechnischen Aspekte wird die genannte Aufgabe bei einem Handteil einer elektrischen Zahnputzvorrichtung der eingangs genannten Art erfindungsgemäß im wesentlichen gelöst durch eine Steuereinrichtung zur Steuerung zumindest eines Zahnreinigungsparameters der Zahnputzvorichtung in Abhängigkeit der erfaßten Codierung, wobei die Codierung personenspezifische und/oder reinigungswerkzeugspezifische Daten umfaßt und wenigstens einer der Zahnreinigungsparameter Putzfrequenz oder Putzgeschwindigkeit oder Anpreßdruck oder Anpreßdruckschwellwert oder Anpreßdrucksollwertbereich gesteuert wird. Hinsichtlich des Putzwerkzeugs der eingangs genannten Art wird die Aufgabe im wesentlichen gelöst durch die Merkmale des Anspruchs 22. Bevorzugte Ausgestaltungen der Erfindung in vorrichtungstechnischer Hinsicht sind ebenfalls Gegenstand abhängiger Ansprüche.

Das Handteil erfaßt also das gerade aufgesetzte Putzwerkzeug und steuert in Abhängigkeit des erfaßten Putzwerkzeugs eine oder vorzugsweise mehrere Funktionen der Zahnputzvorrichtung. Insbesondere kann die Steuereinrichtung des Handteils, unter der an sich selbstverständlichen Annahme, daß jeder Benutzer des Handteils sein personenbezogenes Putzwerkzeug benutzt, anhand der erfaßten Putzwerkzeugcodierung selbsttätig feststellen, welcher der Benutzer die Zahnputzvorrichtung gerade benutzt. Es ist keine Eingabe seitens des Benutzers wie zum Beispiel ein Knopfdruck und dergleichen notwendig, um der Zahnputzvorrichtung mitzuteilen, wer sie benutzt. Es kann somit auch eine automatische Anpassung an den jeweiligen Benutzer erfolgen. Hierdurch wird ein Höchstmaß an Benutzerfreundlichkeit erzielt. Dabei werden mittels der Steuereinrichtung Betriebsparameter wie Putzfrequenz, -geschwindigkeit und -zeit bzw. Anpreßdruckschwellwert oder -sollwertbereich automatisch an den jeweils erfaßten Benutzer angepaßt. Es können verschiedene Benutzerprofile eingestellt und abgespeichert werden, von denen eines von der Steuervorrichtung zur Anwendung gebracht wird, nachdem zu Beginn des Putzvorgangs die Codierung des gerade verwendeten Putzwerkzeugs erfaßt und damit der jeweilige Benutzer bestimmt worden ist. Die Codierungs-Erkennungseinrichtung gibt hierzu ein entsprechendes Signal an die Steuereinrichtung. Bei elektrischen Zahnbürsten kann die Motordrehzahl beispielsweise bei einem Kind als Benutzer gegenüber der sonst für Erwachsene üblichen Drehzahl reduziert werden, so daß für das Kind eine schonendere Zahnreinigung durchgeführt wird. Die Steuervorrichtung kann ferner in Abhängigkeit eines Signals der Codierungs-Erfassungseinrichtung die Zeitdauer eines Timers je nach dem erfaßten Benutzer variieren, beispielsweise bei Kindern auf zwei Minuten und bei Erwachsenen auf drei Minuten einstellen. Auch könnte die Art der Signalgebung des Timers modifiziert werden und beispielsweise bei Kindern als Melodie und bei Erwachsenen als Summton eingestellt werden.

In Weiterbildung der Erfindung können auch benutzerspezifische Daten wie Putzfrequenz, - geschwindigkeit, -zeit, Zeitspanne zwischen Putzvorgängen, oder Anpreßdruck automatisch in Abhängigkeit eines entsprechenden Signals der Erkennungseinrichtung benutzerspezifisch gespeichert, verarbeitet und beispielsweise an einem Display angezeigt werden. Auch hierdurch wird ein erhöhter Bedienungskomfort erreicht.

Der jeweilige Benutzer wird also mittelbar anhand des verwendeten Putzwerkzeugs bzw. dessen Codierung von dem Handteil erfaßt bzw. bestimmt, da jedem Benutzer ein oder mehrere eigene, individuelle Putzwerkzeuge fest zugeordnet sind. Hierzu können die Putzwerkzeuge, die ansonsten identisch ausgebildet sein können, benutzerspezifische Codierungsmittel aufweisen.

Es kann auch eine spezifische Funktionssteuerung in Abhängigkeit des verwendeten Putzwerkzeugtyps vorgesehen sein. Z.B. können Betriebsparameter des Handteils automatisch verändert werden, wenn eine Aufsteckbürste mit bestimmten Eigenschaften, wie große Härte oder geringe Härte verwendet wird. Ebenso kann ein anderes Betriebsprogramm aufgerufen werden, wenn ein Putzwerkzeug eines anderen Typs wie z.B. Interdentalreiniger, Zahnfleischmassierer oder Zungenschaber auf das Handteil aufgesetzt ist. Je nach individuellem Putzwerkzeug und/oder Benutzer können die Drehzahl, Sollputzdauer, Antriebsbewegung, Putzfrequenz, -geschwindigkeit, Anpreßdruckschwellenwert etc. angepaßt werden.

Bei Putzwerkzeugen mit chemischen Zusatzstoffen kann durch den in der Codierung versteckten Herstellzeitpunkt deren Verfallszeit erkannt werden. Vorgegeben Reinigungs- oder Wartungsintervalle können ebenfalls angezeigt werden.

Die Erfassung der unmittelbar an den Putzwerkzeugen vorgesehenen Codierungen sowie die Codierungen der Putzwerkzeuge können in verschiedener Weise erfolgen.

In besonders einfacher Weise ist das Putzwerkzeug durch seine Form codiert. Es kann einen oder mehrere mit dem Putzwerkzeugkorpus fest verbundene oder integrierte Formkörper besitzen, die dann, wenn das Putzwerkzeug an das Handteil angekuppelt ist, im Erfassungsbereich der Codierungs-Erfassungseinrichtung des Handteils liegen. Die Codierung kann in einer bestimmten geometrischen Außenkontur und/oder in einer bestimmten räumlichen Anordnung des Formkörpers relativ zum Kupplungsabschnitt des Putzwerkzeugs und damit letztlich zur Codierungserfassungseinrichtung am Handteil liegen. Die Erfassung des oder der Formkörper kann berührungslos wie durch Lichtschranken oder dergleichen erfolgen.

Nach einer Ausführung der Erfindung wird die jeweilige Codierungs-Einrichtung des Putzwerkzeugs mit der Codierungs-Erfassungseinrichtung in mechanische Berührung gebracht, so daß diese die Codierung lesen kann. Hierdurch wird eine besonders einfache Ausgestaltung erreicht.

Das Handteil kann eine Abtastvorrichtung zur Abtastung der jeweils an dem verwendeten Putzwerkzeug vorgesehenen Codierung besitzen.

Vorzugsweise kann das Handteil einen bewegbaren oder verformbaren Fühler besitzen, der von der mechanischen Codierung des Putzwerkzeugs beim Aufsetzen desselben auf das Handteil bewegt bzw. verformt wird. Je nach Codierung wird der Fühler um ein bestimmtes Maß oder in eine vorbestimmte Richtung bewegt bzw. verformt. Der Fühler erzeugt ein der Bewegung bzw. Verformung entsprechendes Signal, so daß die Codierung erkannt werden kann. Der Fühler kann auch derart ausgebildet sein, daß er eine Kraft fühlt, die die Codierung beim Aufsetzen des Putzwerkzeugs auf das Handteil auf ihn ausübt. Dies kann beispielsweise durch eine piezoelektrische Ausbildung des Fühlers erreicht werden, bei der der Fühler aktiv selbst ein Signal abgibt. Um eine besonders einfache Ausbildung zu erreichen, kann der Fühler als vorzugsweise elektromechanisches Kontaktorgan gestaltet sein. Wird er durch die Codierung des Putzwerkzeugs entsprechend verformt bzw. bewegt, öffnet oder vorzugsweise schließt er einen oder mehrere Kontakte, so daß ein entsprechendes Signal erzeugt wird.

Der Fühler kann derart ausgebildet sein, daß er in Abhängigkeit der Codierung des aufgesetzten Putzwerkzeugs in verschiedene Richtungen oder unterschiedlich stark verformt bzw. bewegt wird und dementsprechend verschiedene Kontakte oder eine unterschiedliche Anzahl von Kontakten schließt.

In Weiterbildung der Erfindung sind mehrere Fühler vorgesehen, so daß durch unterschiedliche Codierungen der Putzwerkzeuge verschiedene oder eine verschiedene Anzahl der Fühler betätigt werden.

Der oder die Fühler können frei zugänglich angeordnet sein. Der Fühler kann hierbei unmittelbar mit einem entsprechendem Codierungsteil des Putzwerkzeugs in Wirkverbindung gebracht werden. Nach einer vorteilhaften Ausführung der Erfindung ist der Fühler mittelbar betätigbar. Der Fühler kann innerhalb eines Gehäuses des Handteils angeordnet sein, das einen verformbaren Abschnitt, beispielsweise in Form eines Weichkunststoffabschnitts, besitzen kann, durch den hindurch der Fühler betätigt werden kann. Hierdurch kann eine gekapselte, insbesondere fluiddichte Ausbildung des Handteils erreicht werden.

In einer anderen vorteilhaften Ausgestaltung der Erfindung kann die Codierungs-Erfassungseinrichtung ein beweglich gelagertes Tastglied aufweisen, das von der Codierung des Putzwerkzeugs beim Aufsetzen auf das Handteil bewegt wird. Die Codierungs-Erfassungseinrichtung besitzt eine Bewegungs-Erfassungseinrichtung, die die Bewegung des Tastglieds vorteilhafterweise dem Betrag und/oder der Größe nach erfaßt. Die verschiedenen Codierungen verschiedener Putzwerkzeuge sind vorzugsweise derart ausgebildet, daß sie beim Aufsetzen des Putzwerkzeugs auf das Handteil unterschiedlich große und/oder unterschiedlich gerichtete Bewegungen des Tastglieds bewirken. Es können mehrere Tastglieder vorgesehen sein, so daß von unterschiedlich angeordneten Codierungsabschnitten der Putzwerkzeuge einzelne Tastglieder oder unterschiedliche Kombinationen der Tastglieder betätigt werden können.

Die Bewegungs-Erfassungseinrichtung kann verschieden ausgebildet sein. Sie kann optisch arbeitend, bspw. nach Art einer Lichtschranke ausgebildet sein. Sie kann auch die Kraft erfassen, die von einer jeweiligen Codierung auf das Tastglied ausgeübt wird. Vorzugsweise kann ein Fühler der oben beschriebenen Art Verwendung finden, der in diesem Fall mittelbar, nämlich über das Tastglied betätigt wird.

Eine besonders vorteilhafte Ausführung der Erfindung besteht darin, daß als Tastglied die Antriebswelle des in dem Handteil angeordneten Antrieb für das Putzwerkzeug vorgesehen ist. Die Antriebswelle kann längsverschieblich gelagert sein, so daß sie von der Codierung des Putzwerkzeugs beim Aufsetzen auf das Handteil in das Handteil gedrückt wird. Durch die Antriebswelle als Tastglied brauchen keine speziellen Vorkehrungen hinsichtlich der Abdichtung des Handteils getroffen werden.

Vorzugsweise besitzt das Putzwerkzeug als Codierung eine Betätigungsfläche, insbesondere eine Druckfläche, die derart ausgebildet und angeordnet ist, daß sie beim Aufsetzen des Putzwerkzeugs auf das Handteil mit einer Eingriffsfläche der Codierungs-Erfassungseinrichtung in Eingriff gerät und auf diese eine definierte Wirkung ausübt. Betätigungsfläche und Eingriffsfläche bilden insofern Wechselwirkungsflächen. Es kann vorgesehen sein, daß Betätigungsflächen unterschiedlicher Codierungen unterschiedliche Wirkungen auf dieselbe Eingriffsfläche ausüben, diese z.B. unterschiedlich stark bewegen. Es kann auch vorgesehen sein, daß verschiedene Betätigungsflächen verschiedene Eingriffsflächen betätigen und hierdurch eine Lesbarkeit der Codierung bewirkt wird. Die handteilseitige Eingriffsfläche kann unmittelbar an dem zuvor beschriebenen Fühler oder auch an dem ebenfalls zuvor beschriebenen Tastglied oder dergleichen Nehmer, insbesondere an der Antriebswelle des Handteils vorgesehen sein. In letzgenanntem Fall ist vorzugsweise die Betätigungsfläche an einem Antriebswellenabschnitt der putzwerkzeugseitigen Antriebswelle vorgesehen. Diese Gestaltung ist besonders vorteilhaft, da die an sich zur Kupplung von Putzwerkzeug und Handteil bereits vorgesehenen Kupplungsabschnitte zur Erkennung des jeweiligen Putzwerkzeug genutzt werden und keine weiteren mechanischen Kopplungsabschnitte vorgesehen und bearbeitet werden müssen. Der putzwerkzeugseitige Kupplungsabschnitt wird mittels und in Form einer Betätigungsfläche codiert bzw. unterschiedlich codiert, um auf den handteilseitigen Kupplungsabschnitt, der hierzu eine entsprechende Eingriffsfläche erhält, eine jeweils definierte Wirkung, insbesondere eine definierte Stellbewegung auszuüben.

Nach einer anderen vorteilhaften Ausführung der Erfindung ist die Codierungs-Erfassungseinrichtung berührungslos arbeitend ausgebildet. Hierdurch wird der Vorteil erreicht, daß Störungen durch Verschmutzung von Kontaktflächen oder Verschleiß durch häufiges Aufstecken und Abnehmen vermieden wird.

Gemäß einer Weiterbildung der Erfindung kann das Handteil einen Signalempfänger der Nehmer zum Empfang eines codierten Signals von dem Putzwerkzeug aufweisen. Das Handteil kann darüber hinaus einen Signalsender oder Geber besitzen, mit dem ein Abfrage- bzw. Aktivierungssignal an das Putzwerkzeug gesandt wird, das daraufhin das codierte Signal zurücksendet. Die Abgabe des codierten Signals von dem Putzwerkzeug kann aktiv durch einen entsprechenden Signalsender erfolgen. Es kann auch eine passive Reflexion an dem Putzwerkzeug erfolgen, wobei eine entsprechende Codierung des Signals bewirkt wird.

Die Codierung der Putzwerkzeuge sowie die entsprechende Erfassung dieser Codierungen können auf weiter verschiedene Art und Weise bewerkstelligt werden. Gemäß einer bevorzugten Ausführung der Erfindung wird mittels einer magnetischen Erfassungs-Einrichtung eine magnetische Codierung des jeweils auf das Handteil aufgesetzten Putzwerkzeugs erfaßt. Die magnetische Codierung der Putzwerkzeuge kann dadurch erfolgen, daß in einen Abschnitt des Putzwerkzeugs eine individuell verschiedene Anzahl von magnetischen Partikeln als Geber eingebracht ist. Die magnetische Erfassungs-Einrichtung kann verschieden ausgebildet sein. Gemäß einer bevorzugten Ausführung der Erfindung weist das Handteil als Nehmer einen Hall-Sensor auf, der ein der magnetischen Codierung des jeweiligen Putzwerkzeugs entsprechendes elektrisches Signal bereitstellt. Gemäß einer weiteren bevorzugten Ausführung der Erfindung kann in dem Handteil ein LC-Oszillator vorgesehen sein, der durch die magnetische Codierung des jeweils aufgesetzten Putzwerkzeugs verstimmt wird und somit verschiedene, den jeweiligen Benutzern zuordenbare Frequenzen liefert.

Eine weitere vorteilhafte Ausführung der Erfindung liegt darin, daß an dem Handteil Reed-Kontakte vorgesehen sind, die beim Aufstecken der Putzwerkzeuge auf den Handteil individuell betätigt werden. Je nach Kombination der betätigten Kontakte kann ein bestimmter Benutzer identifiziert werden. Gemäß einer vorteilhaften Ausführung der Erfindung kann eine optische Erfassungs-Einrichtung zur Erfassung einer optischen Codierung des jeweils auf das Handteil aufgesteckten Putzwerkzeugs vorgesehen sein. Als optische Codierung kann an dem Putzwerkzeug eine Farbmarkierung vorgesehen sein, deren Farbe von einem Farbsensor identifiziert wird.

In vorteilhafter Weise kann das Handteil auch einen oder mehrere Lichtwellenleiter besitzen, die aus dem Handteil austreten und ein optisches Signal aussenden. Das an das Putzwerkzeug abgegebene Lichtsignal wird von diesem codiert und an das Handteil zurückgegeben, der dieses codierte Signal mittels einem entsprechendem Sensor bzw. Detektor empfängt und umsetzt bzw. mittels entsprechender Lichtwellenleiter empfängt und zu einem entsprechenden Sensor weiterleitet. Die Codierung kann dadurch erfolgen, daß die aus dem Handteil austretenden Lichtwellenleiter definiert unterbrochen bzw. teilverdeckt werden. Ferner kann das durch den Lichtwellenleiter aus dem Handteil austretende Licht von der Zahnbürste unterschiedlich reflektiert werden. Je nach Stärke der Reflexion kann ein bestimmter Benutzer erkannt werden.

Gemäß einer weiteren bevorzugten Ausführung der Erfindung kann eine kapazitive Erfassungs-Einrichtung zur Erfassung einer kapazitiven Codierung des jeweils angekoppelten Putzwerkzeugs vorgesehen sein. Insbesondere kann das Handteil zwei oder mehrere Kondensatorplatten besitzen, deren Kapazität durch Einfügen eines Dielektrikums, das an dem Putzwerkzeug vorgesehen ist, verändert wird. Die Codierung der Putzwerkzeuge kann durch verschiedene Dielektrikaabschnitte an dem jeweiligen Putzwerkzeug erfolgen. Entsprechend der Veränderung der Kapazität kann ein bestimmter Benutzer erkannt werden.

Eine weitere vorteilhafte Ausführung der Erkennungs-Einrichtung besteht darin, daß eine bevorzugt elektrisch arbeitende Erfassungs-Einrichtung zur Erfassung einer elektrischen Codierung des jeweils angekoppelten Putzwerkzeugs vorgesehen ist. Das Putzwerkzeug sendet ein codiertes elektrisches Signal an das Handteil bzw. an einen daran vorgesehenen Signalempfänger, so daß der jeweilige Benutzer bzw. das jeweilige Putzwerkzeug erkannt werden kann. Es kann auch zunächst ein Abfragesignal von dem Handteil an das Putzwerkzeug gesandt werden, das von dem Putzwerkzeug codiert und anschließend zurückgesandt wird.

In Weiterbildung der Erfindung kann eine Funkeinrichtung zur Erkennung des jeweils aufgesteckten Putzwerkzeugs mittels elektromagnetischer Wellen vorgesehen sein. Insbesondere kann dem Putzwerkzeug ein Transponder zugeordnet sein. Das Handteil sendet zunächst elektromagnetische Wellen aus, um den Transponder mit Energie zu versorgen. Dieser speichert die Energie und sendet eine individuelle Kennung an einen Detektor in dem Handteil zurück, der diese erkennt und dementsprechend den jeweiligen Benutzer bzw. das Putzwerkzeug identifiziert. Das Putzwerkzeug zeichnet sich also dadurch aus, daß eine magnetische, elektrische, kapazitive, elektromagnetische und/oder mechanische Codiereinrichtung vorgesehen ist. Ferner kann es sich dadurch auszeichnen, daß ein Signalempfänger zum Empfang eines Signals von der Zahnputzvorrichtung und ein Signalsender zum Senden eines codierten Signals an die Zahnputzvorrichtung vorgesehen sind, wobei zwischen den Signalempfänger und den Signalsender eine Codiereinrichtung zur Codierung des empfangenen Signals geschaltet ist.

Vorzugsweise ist die Codiereinrichtung als integriertes Bauteil des Putzwerkzeuges ausgebildet. Sie kann aber auch als separates Bauteil von dem restlichen Teil des Putzwerkzeugs abgenommen bzw. ausgetauscht werden. Hierdurch wird der Vorteil erreicht, daß das Putzwerkzeug an sich nur in einer Form gefertigt werden muß. Durch Anbringen der separaten Codiereinrichtung werden die Putzwerkzeuge individuell codiert und können einem bestimmten Benutzer zugeordnet werden.

Vorzugsweise ist die Codiereinrichtung im Bereich der Verbindung des Putzwerkzeugs zu dem Handteil angeordnet. Hierdurch wird das Lesen der Codierung durch die Erkennungs-Einrichtung an dem Handteil erleichtert. Insbesondere kann die Codiereinrichtung in einen Ring integriert sein, der an der handteilseitigen Stirnseite des Putzwerkzeugs angeordnet, insbesondere formschlüssig aufgeschnappt sein kann. Die verschiedenen Ausbildungen der Erkennungs-Einrichtungen können jeweils für sich allein oder auch in Kombination miteinander vorgesehen sein. Entsprechendes gilt für die verschiedenen Ausbildungen der Codiereinrichtung an dem Putzwerkzeug.

Zusammengefaßt wird durch die Erfindung eine elektromotorische Zahnbürste, bestehend aus einem Handstück und ein oder mehreren benutzerspezifischen Aufsteckteilen, z. B. Aufsteckbürsten oder dergleichen, zur Verfügung gestellt, wobei eine Kommunikation zwischen Handstück und dem auf das Handstück aufgesteckten Bürstenteil stattfindet. Die Bürstenteile oder Reinigungswerkzeuge können unterschiedlich ausgebildet sein, z. B. als Kinderzahnbürste mit weicheren Borsten, Erwachsenenzahnbürste mit härteren Borsten, Interdentalbürste oder dergleichen, wobei jede dieser gegebenenfalls konstruktiv unterschiedlichen Reinigungswerkzeuge für spezielle Einsatzzwecke jeweils auch einem bestimmten Benutzer gung gestellt, auf das dann benutzerspezifische gleiche oder unterschiedlich ausgebildete Reinigungswerkzeuge aufgesteckt werden, um die Zahnpflege bzw. Zahnreinigung bei dem jeweiligen Benutzer mittels des oder der benutzerspezifischen Reinigungswerkzeuge durchführen zu können. Die Reinigungswerkzeuge weisen einen Geber bzw. eine Codierung auf, die mit einem Nehmer oder einer Codierungs-Erfassungseinrichtung im Handstück kommunizieren. Somit kann über eine entsprechende Ausgestaltung des oder der Geber bzw. Codiereinrichtung im Reinigungswerkzeug dem Handstück über die Kommunikation der Codiereinrichtung mit der Codierungs-Erfassungseinrichtung mitgeteilt werden, welches personenspezifische Reinigungswerkzeug, sei es nun ein Interdentalreinigungswerkzeug, eine Zahnbürste oder ein sonstiges Reinigungswerkzeug, gerade dem Handstück aufgesteckt ist. Durch diese Möglichkeit der Erfassung der personenspezifischen bzw. reinigungswerkzeugspezifischen Daten des jeweils auf das Handstück aufgesetzten Reinigungswerkzeuges ist die Voraussetzung dafür geschaffen, daß das Handstück personen- oder reinigungswerkzeugspezifisch das jeweils aufgesteckte Reinigungswerkzeug betreiben kann. So können beispielsweise die Putzzeitdauer, die Putzgeschwindigkeit oder dergleichen putzspezifische Parameter personen- und reinigungswerkzeugspezifisch mittels des Handstückes eingestellt werden. Weiterhin ist es auch möglich, personen- bzw. reinigungswerkzeugspezifische Daten bezüglich des Reinigungsvorganges zu erfassen, die beispielsweise in benutzer- bzw. reinigungswerkzeugspezifischen Speichern des Handstücks abgelegt bzw. zur Anzeige gebracht werden können. Die vorliegende Erfindung stellt nicht nur ein Verfahren zur benutzer- bzw. reinigungswerkzeugspezifischen Erkennung des jeweiligen auf das Handstück der elektrischen Zahnbürste aufgesteckten Reinigungswerkzeugs unter Schutz, sondern auch das Handstück der elektromotorischen Zahnbürste sowie das dazugehörige Reinigungswerkzeug, die letztgenannten jeweils für sich gesehen.

Ein Ausführungsbeispiel des erfindungsgemäßen Putzwerkzeuges nach den Ansprüchen 22 bis 27 ist in dem Fig. 18 bis 20 mit zugehörigen Text dargestellt. Die weiteren Ausfuhrungsbeispiele des Putzwerkzeuges dienen lediglich zur Erläuterung der Erfindung.

Es zeigen:
- Figur 1: eine perspektivische Darstellung einer elektrischen Zahnbürste mit einem Handteil und einer auf diesen aufsteckbaren Aufsteckbürste,
- Figur 2: eine schematische Längsschnittansicht des Handteils der elektrischen Zahnbürste aus Figur 1, die dessen Gehäuse, den darin angeordneten Antriebsmotor mit Getriebe und Antriebswelle, den Akku für den Antriebsmotor sowie das Lademodul für den Akku zeigt,
- Figur 3: eine schematische Darstellung einer elektrischen Zahnbürste mit einer magnetischen Codierung der Aufsteckbürste sowie einem Hallsensor zur Erfassung der Codierung nach einer bevorzugten Ausführung der Erfindung,
- Figur 4: eine auschnittsweise Schnittansicht der Zahnbürste aus Figur 3, die die Anordnung des Hallsensors sowie der magnetischen Codierung der Aufsteckbürste zeigt, wobei letztere auf das Handteil gesteckt ist,
- Figur 5: eine schematische Darstellung einer elektrischen Zahnbürste mit einer magnetisch codierten Aufsteckbürste sowie einem LC-Oszillator in dem Handteil zur Erfassung der Codierung gemäß einer weiteren bevorzugten Ausführung der Erfindung,
- Figur 6: eine auschnittsweise Schnittansicht der Zahnbürste aus Figur 5, die die Anordnung des LC-Oszillators sowie der magnetischen Codierung der Aufsteckbürste zeigt, wobei letztere auf das Handteil gesteckt ist,
- Figur 7: eine schematische Darstellung einer elektrischen Zahnbürste mit einer magnetischen Codierung der Aufsteckbürste sowie einem Handteil mit Reedkontakten zur Erfassung der Codierung gemäß einer weiteren bevorzugten Ausführung der Erfindung,
- Figur 8: eine auschnittsweise Schnittansicht der Zahnbürste aus Figur 7, die die Anordnung der Reedkontakte sowie der magnetischen Codierung der Aufsteckbürste zeigt, wobei letztere auf das Handteil gesteckt ist,
- Figur 9: eine schematische Darstellung einer elektrischen Zahnbürste mit einer optisch codierten Aufsteckbürste sowie einem Handteil mit Lichtwellenleiter gemäß einer weiteren bevorzugten Ausführung der Erfindung,
- Figur 10: eine auschnittsweise Schnittansicht einer Zahnbürste ähnlich Figur 9, die die Anordnung eines Lichtemitters und eines Lichtdetektors im Handteil sowie einer Codierung der Aufsteckbürste in Form eines Lichtwellenleiters zeigt, wobei die Aufsteckbürste auf das Handteil gesteckt ist,
- Figur 11: eine Draufsicht auf die Lichtwellenleiter an der handteilseitigen Stirnfläche der Aufsteckbürste aus Figur 10,
- Figur 12: eine auschnittsweise Schnittansicht einer Zahnbürste ähnlich Figur 10, die die Anordnung eines Lichtemitters und eines Lichtdetektors in Form eines einzelnen integrierten Bauteils im Handteil sowie einer Codierung der Aufsteckbürste in Form eines Lichtwellenleiters zeigt, wobei die Aufsteckbürste auf das Handteil gesteckt ist,
- Figur 13: eine schematische Darstellung einer elektrischen Zahnbürste mit einer optisch codierten Aufsteckbürste sowie einem Handteil mit Farbsensor zur Erkennung der Codierung der Aufsteckbürste gemäß einer weiteren bevorzugten Ausführung der Erfindung,
- Figur 14: eine auschnittsweise Schnittansicht der Zahnbürste aus Figur 13, die die Anordnung des Farbsensors im Handteil sowie die Farbcodierung der Aufsteckbürste zeigt, wobei letztere auf das Handteil gesteckt ist,
- Figur 15: eine schematische Darstellung einer elektrischen Zahnbürste mit einer mechanisch durch ihre Form codierten Aufsteckbürste gemäß einer weiteren bevorzugten Ausführung der Erfindung,
- Figur 16: eine perspektivische Ansicht der Zahnbürste aus Figur 15 beim Aufstecken der Aufsatzbürste auf das Handteil,
- Figur 17: eine auschnittsweise Schnittansicht der Zahnbürste aus Figur 15 und 16, die die Anordnung der Codierungsvorsprünge an der Aufsteckbürste sowie der Fühler in Form elektromechanischer Kontakte zur Erfassung der Codiervorsprünge zeigt, wobei die Aufsteckbürste auf das Handteil gesteckt ist,
- Figur 18: eine schematische Darstellung einer elektrischen Zahnbürste mit einer elektromagnetisch codierten Aufsteckbürste mit aufgeklebtem Transponder und einer entsprechenden Erfassungseinrichtung im Handteil gemäß einer weiteren bevorzugten Ausführung der Erfindung,
- Figur 19: eine perspektivische Ansicht der Zahnbürste aus Figur 18,
- Figur 20: eine auschnittsweise Schnittansicht einer Zahnbürste ähnlich Figur 18 und 19, die die Anordnung eines Transponderchips in einem stirnseitigen Codierring der Aufsteckbürste sowie einer Sende- und Empfangsspule nebst zugehöriger Auswerteelektronik im Handteil zeigt, wobei die Aufsteckbürste auf das Handteil gesteckt ist,
- Figur 21: eine schematische Darstellung einer elektrischen Zahnbürste mit einer kapazitiv codierten Aufsteckbürste sowie Kondensatorplatten im Handteil zur Erfassung der Codierung der Aufsteckbürste gemäß einer weiteren bevorzugten Ausführung der Erfindung,
- Figur 22: eine auschnittsweise Längsschnittansicht der Zahnbürste aus Figur 21, die die Anordnung des Dielektrikumabschnitts der Aufsteckbürste sowie der Kondensatorplatten im Handteil zeigt, wobei die Aufsteckbürste auf das Handteil gesteckt ist,
- Figur 23: eine auschnittsweise Querschnittansicht der Zahnbürste entlang der Linie A-A in Figur 22, die die Anordnung des Dielektrikumabschnitts der Aufsteckbürste sowie der Kondensatorplatten im Handteil zeigt,
- Figur 24: eine Schnittansicht eines Handteils mit längsverschieblich gelagerter Antriebswelle und einem elektromechanischen Fühler zur Erfassung der Verschiebung der Antriebswelle nach einer weiteren bevorzugten Ausführung der Erfindung, und
- Figur 25: eine Schnittansicht des Handteils aus Figur 23 mit aufgesetzter Aufsatzbürste.

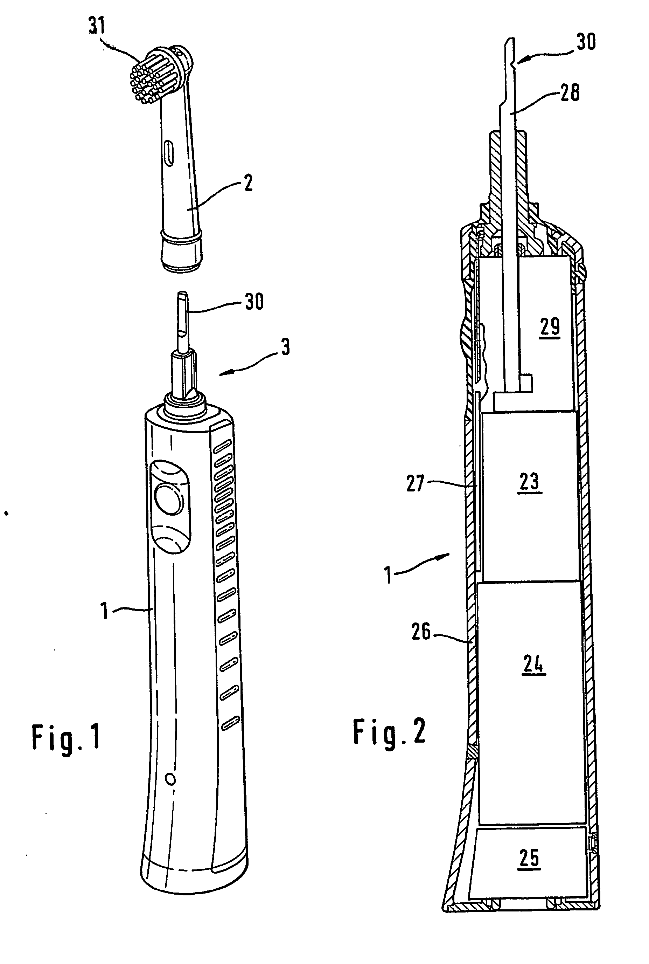

Die in den Figuren gezeigte elektrische Zahnbürste besitzt einen Handteil 1 mit einem geschlossenen Gehäuse 26, in dem unter anderem, wie in Figur 2 dargestellt, in an sich bekannter Weise ein Elektromotor 23, ein Akku 24, der über ein bodenseitig angeordnetes Lademodul 25 an eine Ladestation ankoppelbar ist, sowie eine Steuereinrichtung 27, die eine Leiterplatte bzw. einen Mikroprozessor besitzen kann, untergebracht sind. Auf den Handteil 1 sind verschiedene Aufsteckbürsten 2 stirnseitig aufsetzbar. Mittels einer Kupplung 3 kann die Aufsteckbürste 2 mechanisch an das Handteil 1 angekuppelt werden, um die Antriebsbewegung des Elektromotors auf den Bürstenkopf 4 der Aufsteckbürste 2 zu übertragen. Die Kupplung 3 umfaßt einerseits eine formschlüssige Festlegung des Putzwerkzeugkorpus an sich, sowie andererseits eine Antriebskupplung, die die Antriebsbewegung des Antriebs auf den Borstenkopf der Aufsteckbürste überträgt. Aus dem Handteil 1 ragt stirnseitig eine Antriebswelle 28, die vom Antriebsmotor 23 über ein Getriebe 29 in an sich ebenfalls bekannter Weise antreibbar ist. Die Antriebswelle 28 besitzt einen Kupplungsabschnitt 30, auf den eine in dem Putzwerkzeug 2 angeordnete Antriebswelle mit einem komplementären Kupplungsabschnitt formschlüssig aufsetzbar ist, so daß die Antriebsbewegung übertragen und der Borstenkopf 31 der Aufsteckbürste oszillierend antreibbar ist.

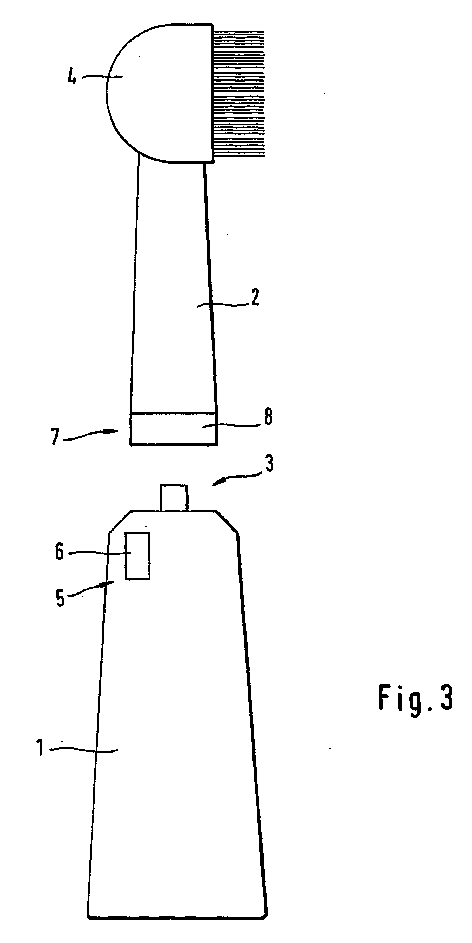

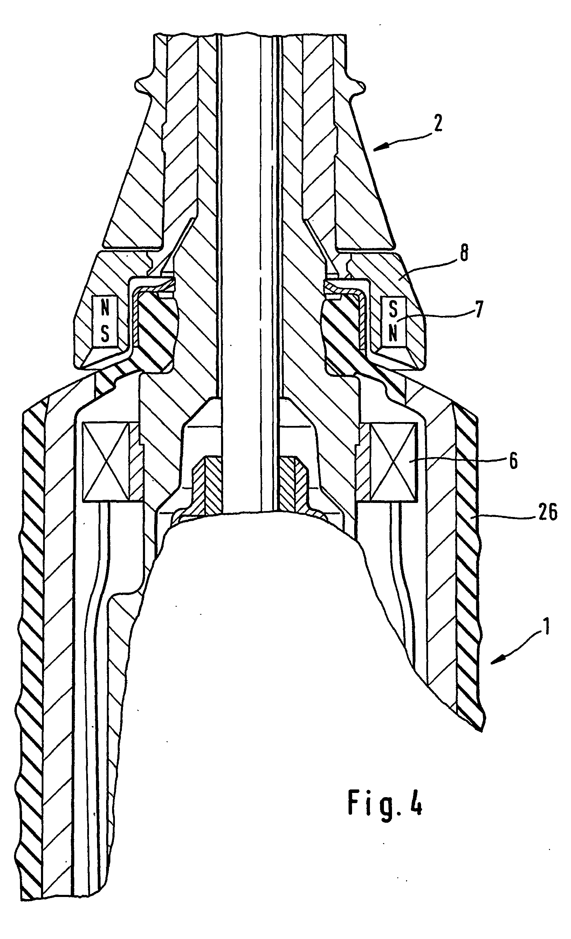

Um die jeweils aufgesteckte Aufsteckbürste 2 zu erkennen, ist am Handteil eine Codierungs-Erfassungseinrichtung 5 vorgesehen. Gemäß Figur 3 ist ein Hallsensor 6 am kupplungsseitigen Ende des Handteils 1 angeordnet, um eine magnetische Codierung 7 der Aufsteckbürste 2 zu lesen bzw. zu erkennen. Die magnetische Codierung 7 wird von einem Aufsteckring 8 gebildet, der an dem kupplungsseitigen Ende der Aufsteckbürste 2 an dieser angebracht ist. Der Aufsteckring 8 ist in verschiedenen Farben verfügbar und enthält je nach Farbe eine unterschiedliche Anzahl von magnetischen Partikeln bzw. Magnetkörper in unterschiedlicher Anzahl, magnetischer Orientierung und/oder magnetischer Feldstärke. Wie Figur 4 zeigt, kann der Aufsteckring 8 vorteilhafterweise förmschlüssig am Aufsteckbürstenkorpus festgelegt, insbesondere auf diesen aufgeschnappt werden. Die Verbindung kann dabei derart ausgebildet sein, daß der Ring 8 in nur einer festgelegten Ausrichtung zum Aufsteckbürstenkorpus an diesem befestigbar ist. Der Hallsensor 6 im Handteil 1 liefert ein mit der Anzahl der magnetischen Partikel bzw. der Anordnung der Magnetkörper korrelierendes Signal, dessen Wert die jeweilige Aufsteckbürste 2 und damit einen bestimmten Benutzer kennzeichnet und von der Steuereinrichtung in dem Handteil 1 weiterverarbeitet werden kann. Die Zuordnung der jeweiligen Aufsteckbürste 2 zu dem entsprechenden Benutzer kann durch die Farbe des Aufsteckrings 8 einfach merkbar vorgenommen werden.

Wie Figur 4 zeigt, sind die magnetische Codierung 7 und der Hallsensor 8 jeweils im Bereich der kupplungsseitigen Stirnseiten der Aufsteckbürste bzw. des Handteils angeordnet, und zwar vorteilhafterweise einander gegenüberliegend, um eine präzise Erfassung zu ermöglichen.

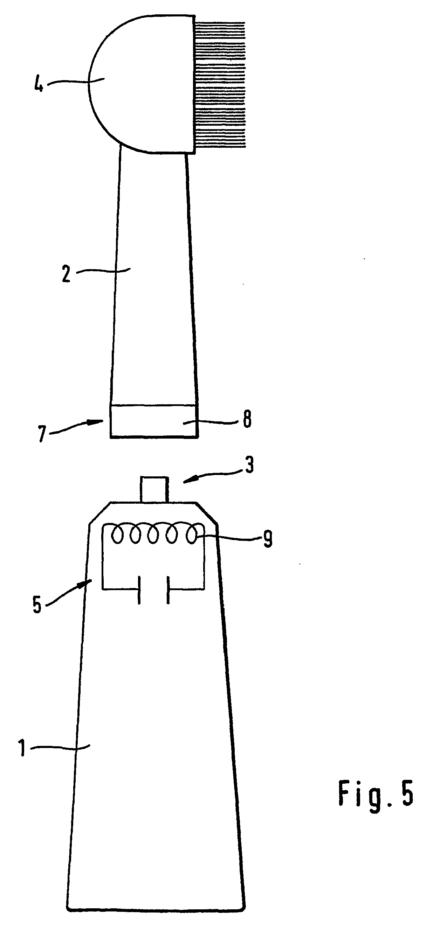

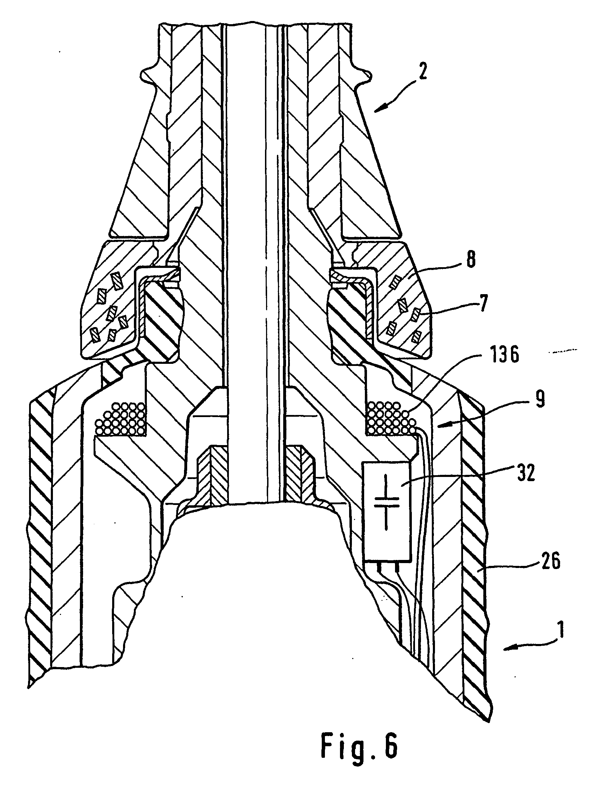

Die elektrischen Zahnbürsten gemäß den weiteren Ausführungen nach den Figuren 5 und folgende besitzen grundsätzlich denselben Aufbau wie die in Figur 1 und 2 gezeigte Zahnbürste, so daß für entsprechende Bauteile dieselben Bezugsziffern vergeben sind und nachfolgend nur die unterschiedlichen Ausführungen der Codierungen 7 der Aufsteckbürsten 2 und der entsprechenden Codierungs-Erfassungseinrichtungen 5 am Handteil 1 beschrieben werden. Bei der in Figur 5 und 6 gezeigten elektrischen Zahnbürste ist die Aufsteckbürste 2 ebenfalls mit einem Aufsteckring 8 versehen, welcher in unterschiedlichen Farben verfügbar ist und je nach Farbe eine unterschiedliche Anzahl von magnetischen Partikeln enthält. Die Erkennungs-Einrichtung 5 besitzt zur Erfassung der magnetischen Codierung der Aufsteckbürste 2 einen LC-Oszillator 9, der im Handteil 1 an dessen kupplungsseitigem Ende angeordnet ist und durch das magnetische Material in der Aufsteckbürste 2 verstimmt wird und hierdurch verschiedene, den Aufsteckbürsten bzw. den Benutzern zuordenbare Frequenzen liefert. Die entsprechenden Frequenzsignale werden von der Steuereinrichtung im Handteil 1 weiter verarbeitet, um die entsprechenden Betriebsparameter einzustellen bzw. die benutzerspezifischen Daten zu verarbeiten und anzuzeigen.

Wie Figur 6 zeigt, besitzt der LC-Oszillator eine Spule 136 sowie einen Kondensator 32, die beide im kupplungsseitigen Endbereich des Handteils liegen. Die Spule ist unmittelbar stirnseitig angeordnet. Sie kann an einem Absatz oder dergleichen eines Handteilchassis gelagert sein. Der Kondensator liegt unterhalb der Spule, die gegenüber dem Codierungsring 8 angeordnet ist. Hierdurch ist eine Erfassung der Codierung mit großer Genauigkeit möglich.

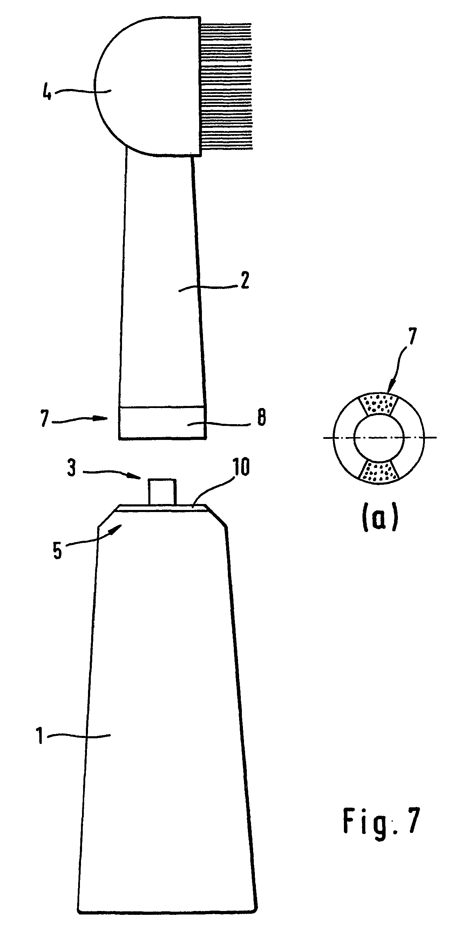

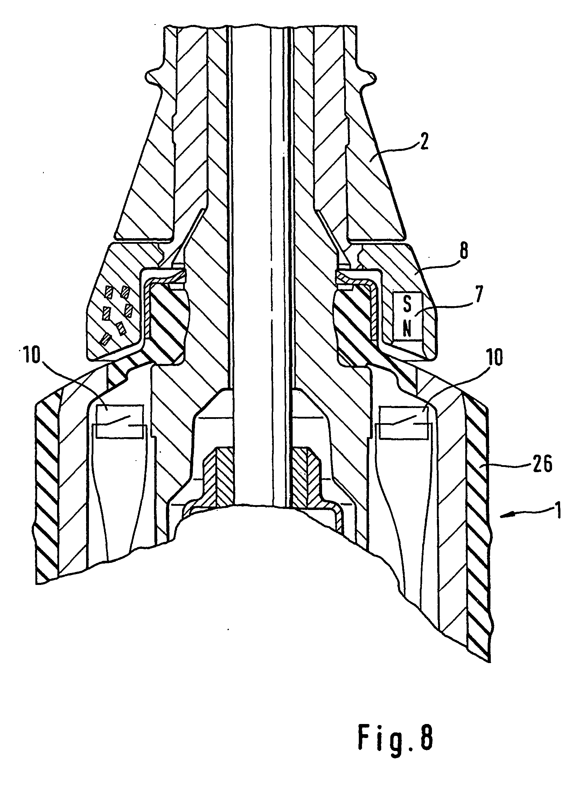

Figur 7 zeigt eine weitere Ausführung einer elektrischen Zahnbürste, bei der der Aufsteckring 8 der Aufsteckbürste 2 entlang seinem Umfang nur an bestimmten Stellen mit magnetischen Material versehen ist (vgl. Figur 7a). Die Erkennungs- Einrichtung 5 umfaßt Reed-Kontakte 10 (vgl. Fig. 8), die an dem Handteil 1 an dessen an der Kupplung 3 liegenden Stirnseite angeordnet sind. Beim Aufstecken der Aufsteckbürste 2 auf das Handteil 1 werden die Reed-Kontakte 10 entsprechend der magnetischen Codierung des Aufsteckrings 8 definiert betätigt. Je nach Kombination der betätigten Kontakte kann ein bestimmter Benutzer identifiziert werden. Der Aufsteckring 8 ist auch hier als Farbring ausgebildet, um die Zuordnung zu einem Benutzer zu erleichtern.

Um das Ansprechen der Reedkontakte zu verbessern, sind der magnetische Ring 8 sowie die Reedkontakte 10 jeweils stirnseitig und einander gegenüberliegend angeordnet.

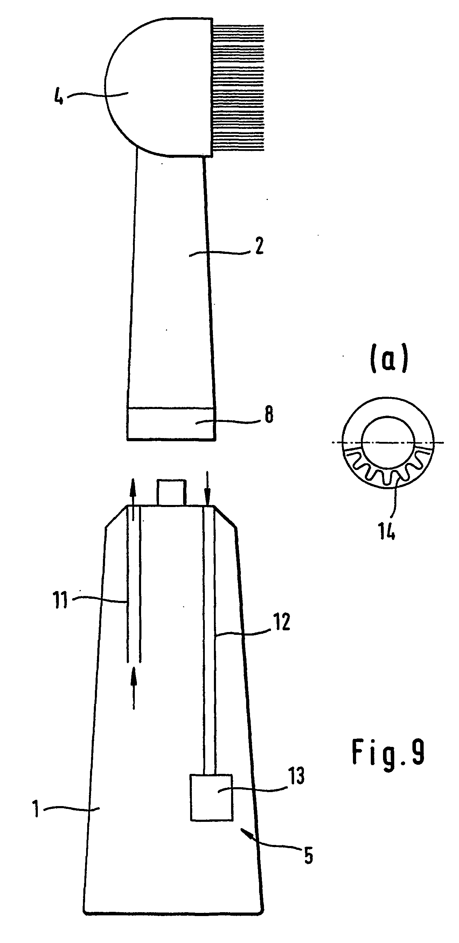

Die Figur 9 zeigt eine Ausführung einer elektrischen Zahnbürste, bei der die Erkennung der Aufsteckbürste 2 optisch erfolgt. Die Erkennungs-Einrichtung 5 umfaßt in dem Handteil 1 einen oder mehrere Lichtwellenleiter 11, die an dem kupplungsseitigen Ende des Handteils austreten und von der Aufsteckbürste 2 definiert unterbrochen bzw. teilverdeckt werden. Die Aufsteckbürste 2 leitet das aus den Lichtwellenleitern 11 austretende Lichtsignal codiert in das Handteil 1 zurück, in dem das codierte Lichtsignal durch Lichtwellenleiter 12 zu einem Sensor 13 geleitet wird, der detektiert, ob und wieviel Licht zurückgeleitet wurde und ein entsprechendes Erkennungssignal abgibt, anhand dessen die Aufsteckbürste einem Benutzer zugeordnet werden kann. Zur Codierung und Rücksendung des Lichtsignals kann die Aufsteckbürste 2 einen vorzugsweise ebenfalls farbigen Aufsteckring 8 besitzen, in dem entsprechende Lichtwellenleiter 14 vorgesehen sind (vgl. Figur 9a). Eine weitere Variante besteht darin, daß das durch den Lichtwellenleiter 11 im Handteil 1 austretende Licht von der Aufsteckbürste 2 bzw. einem entsprechend codierten Aufsteckring 8 individuell reflektiert wird. Je nach Stärke der Reflexion kann ein bestimmter Benutzer erkannt werden.

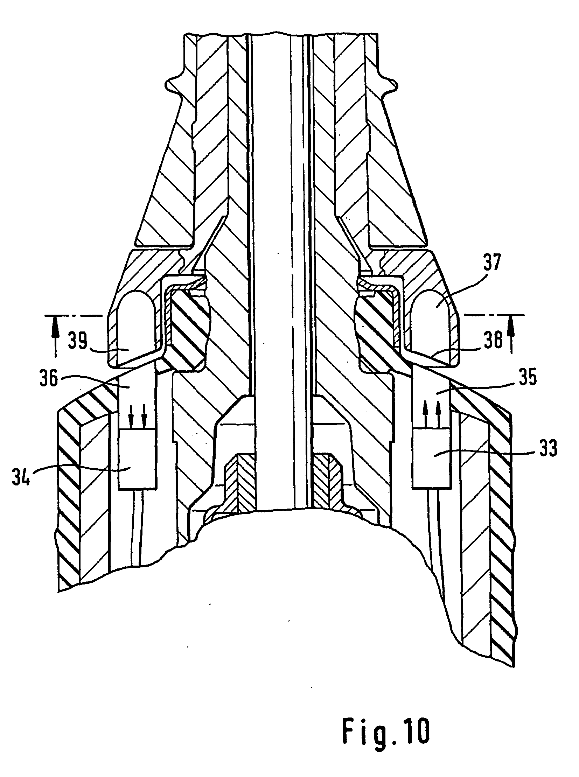

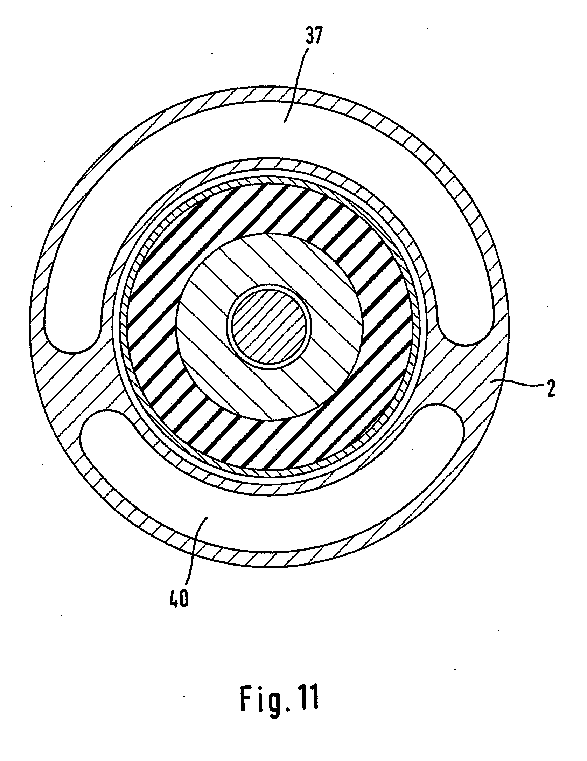

Die Figuren 10 und 11 zeigen eine vorteilhafte Variante der Zahnbürste aus Figur 9 mit optischer Codierung der Aufsteckbürste und entsprechender Codierungserfassung durch das Handteil 1. Im Handteil 1 sind unmittelbar an dessen kupplungsseitiger Stirnseite ein Lichtemitter 33 sowie in Umfangsrichtung versetzt ein Lichtdetektor 34 angeordnet, die durch eine Lichtaustrittsöffnung 35 und eine Lichteintrittsöffnung 36 jeweils in der Stirnseite des Handteilgehäuses 26 auf das angekuppelte Aufsteckbürstchen 2 schauen. Die Lichtaustritts- und -eintrittsöffnungen können mit transparentem Material verschlossen sein, um eine geschlossene Ausbildung des Gehäuses 26 zu erreichen. Sowohl der Emitter 33 wie auch der Detektor 34 sind mit der Steuer- und Auswerteeinrichtung 27 des Handteils 1 verbunden. Wie Figur 11 zeigt, ist im Aufsteckring 8 der Aufsteckbürste 2 ein Lichtleiter 37 eingesetzt, der über eine Lichteintrittsöffnung 38 (vgl. Fig. 10) das vom Emitter 33 ausgesendete Licht einfängt, codiert und über eine Lichtaustrittsöffnung 39 im Aufsteckring 8 an den Detektor 34 im Handteil zurückgibt. Die Lichtleitung kann verschieden erfolgen, insbesondere durch Reflexion. In diesem Fall kann der Lichtleiter als Reflektor ausgebildet sein. Das vom Lichtdetektor abgegebene Signal kann von der Steuereinrichtung des Handteils 1 ausgewertet werden, um die jeweilige Aufsteckbürste zu bestimmen. Der Lichtleiter 37 verläuft im Aufsteckring 8 etwa bogenförmig (vgl. Fig. 11). Um die Codierungsmöglichkeiten zu erhöhen, können mehrere Lichtverarbeitungeinrichtungen vorgesehen sein. Figur 11 zeigt einen zweiten Lichtleiter 40. Die Codierung kann dadurch erfolgen, an welchen von mehreren Lichtdetekoren der jeweilige Lichtleiter das empfangene Licht zurückgeben. Die Codierung kann auch dadurch erfolgen, daß die Lichtleiter das empfangene Licht in unterschiedlicher Weise verändern oder bearbeiten, insbesondere unterschiedlich stark reflektieren. Dies wird sodann vom Lichtdetektor in ein entsprechendes Signal umgesetzt.

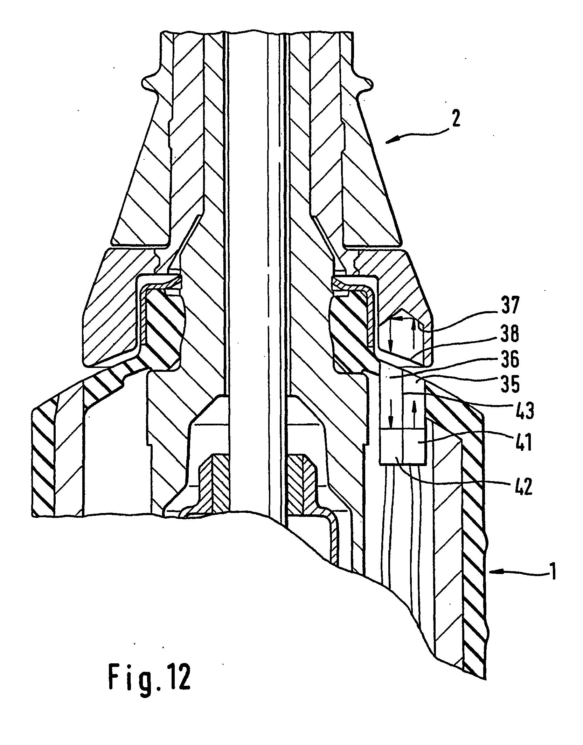

Figur 12 zeigt eine weitere Variante der optischen Codierung. Hier sind der Lichtemitter 41 und der Lichtdetektor 42 als integriertes Bauteil ausgebildet. Die entsprechenden Lichteintritts- und -austrittsöffnungen sind vorzugsweise durch eine Trennwand 43 voneinander separiert. Das Licht kann insbesondere durch eine unterschiedlich starke Reflexion codiert werden.

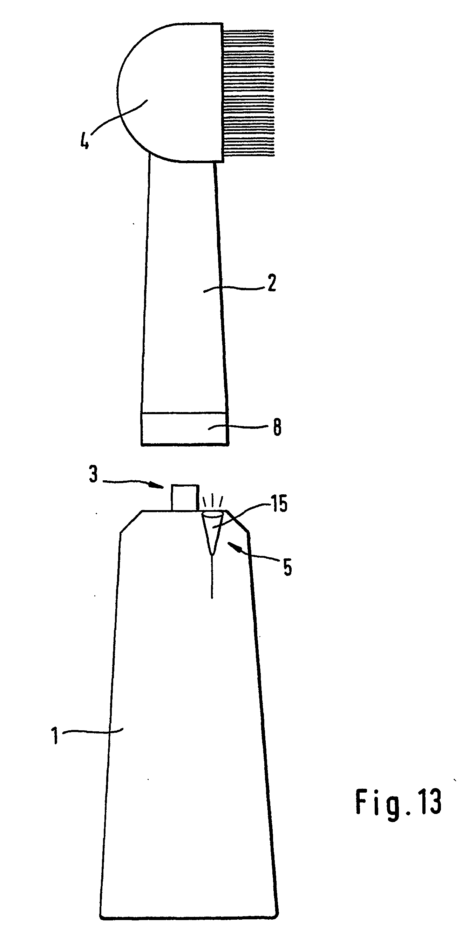

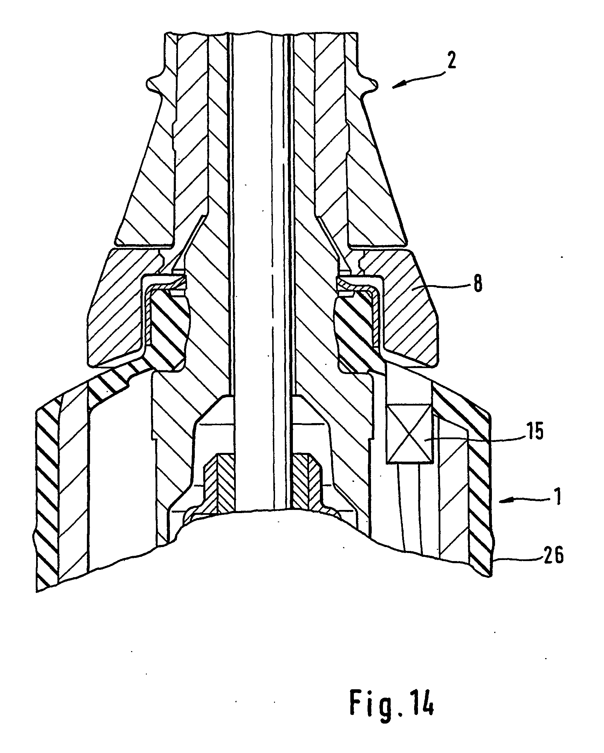

Die in Figur 13 und 14 gezeigte Ausführungsform einer elektrischen Zahnbürste besitzt wie die vorhergehenden Ausführungsformen einen farbigen Aufsteckring 8 an der der Kupplung 30 zugeordneten Stirnseite der Aufsteckbürste 2. Das Handteil 1 besitzt als Erkennungs-Einrichtung 5 einen Farbsensor 15, der an dem kupplungsseitigen Ende des Handteils 1 angeordnet und auf den farbigen Aufsteckring 8 gerichtet ist. Der Farbsensor 15 erkennt die Farbe des Aufsteckrings 8, so daß die jeweilige Aufsteckbürste bzw. der jeweilige Benutzer der Zahnbürste bestimmt werden kann. Zweckmäßigerweise ist der Farbsensor unmittelbar an der kupplungsseitigen Stirnseite des Handteils 1 angeordnet und auf den Ring 8 gerichtet, wenn die Aufsteckbürste auf dem Handteil 1 sitzt. Die Farbe des Aufsteckringes 8 weist bevorzugt Fluoriszenzeigenschaften oder sonstige, die Lichtsstärke erhöhende Eigenschaften auf, so daß die Farbe des Aufsteckringes 8 sicher durch den Farbsensor 15 erkennbar ist.

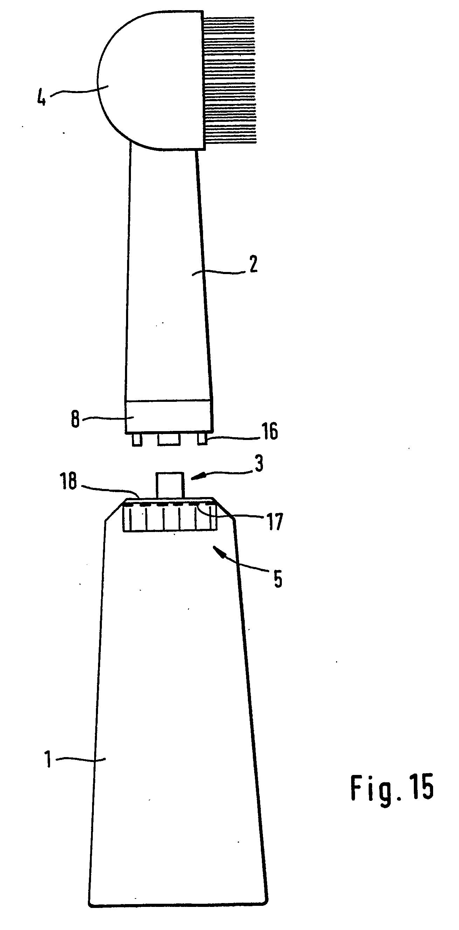

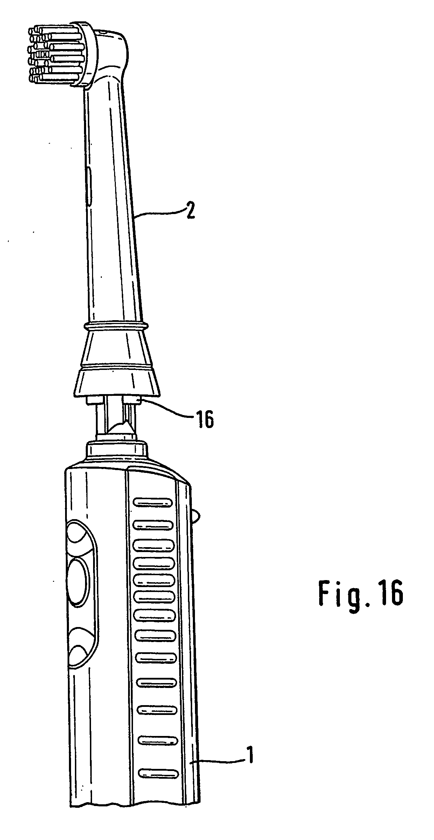

Figuren 15, 16 und 17 zeigen eine Ausführung einer elektrischen Zahnbürste, bei der die Erkennung der Aufsteckbürsten 2 mechanisch erfolgt. Der farbige Aufsteckring 8 an der Stirnseite der Aufsteckbürste 2 besitzt als individuell geformte Codierungs-Formkörper Vorsprünge 16 bzw. Ausnehmungen in Form von Sicken oder Nuten. Gemäß einer Ausführung der Erfindung erstrecken sich die Formkörper als Vorsprünge an der Stirnseite der Aufsteckbürste insbesondere im wesentlichen parallel zur Längsachse der Aufsteckbürste. An der gegenüberliegenden Stirnseite des Handteils 1 sind elastisch verformbare Fühler in Form mechanischer Kontakte 17 vorgesehen, die von der Aufsteckbürste 2 bzw. den Vorsprüngen 16 des Aufsteckrings 8 individuell und definiert betätigt werden, so daß entsprechend der Kombination der betätigten Kontakte die jeweilige Aufsteckbürste 2 erkannt wird.

Die Codierungs-Formkörper 16 besitzen hierzu Betätigungs- bzw. Druckflächen, die derart angeordnet, ausgerichtet und/oder ausgebildet sind, daß sie beim Aufsetzen der Aufsteckbürste auf das Handteil dessen Fühler um ein vorbestimmtes Maß niederdrücken. Die Fühler erzeugen ein ihrem Niederdrücken entsprechendes Signal, im einfachsten Fall ein Ein/Aussignal entsprechend der Kontaktierung der an den Fühlerenden vorgesehenen Kontaktabschnitte. Die Betätigung der mechanischen Kontakte 17 kann vorzugsweise elektrisch abgefragt werden. Um die mechanischen Kontakte 17 abzudecken und gegenüber der Umgebung abzuschirmen, kann an der Stirnseite des Handteils 1 über die mechanischen Kontakte 17 eine Weichmembran 18 gelegt sein, durch die hindurch die mechanischen Kontakte 17 von den Vorsprüngen 16 betätigt werden können. Das Gehäuse 26 kann hierzu in Zweikomponenten-Spritzgußtechnik aus Hart- und Weichkunststoff gefertigt sein.

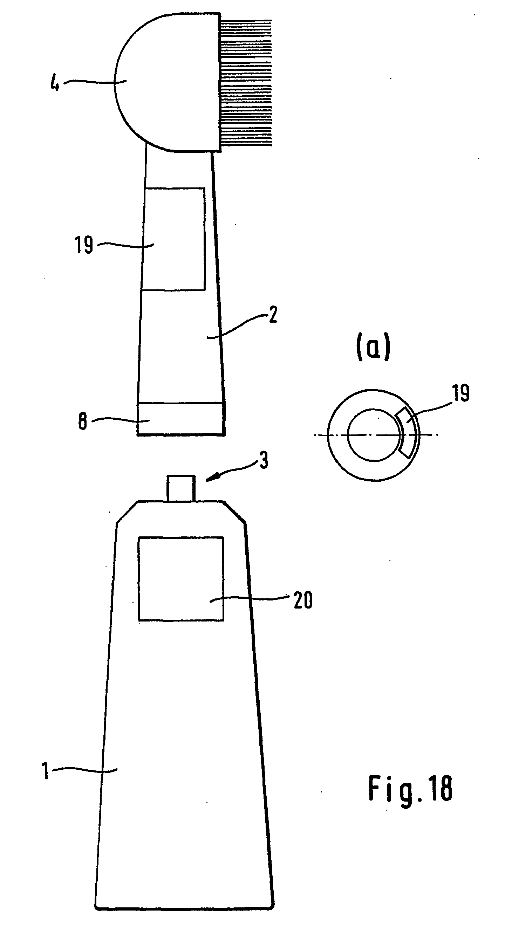

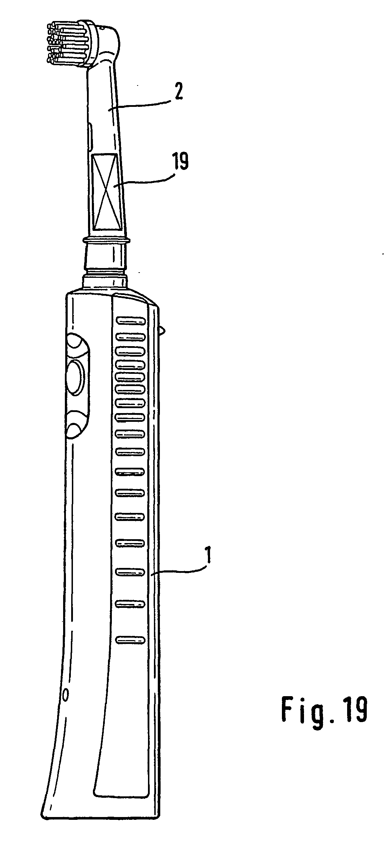

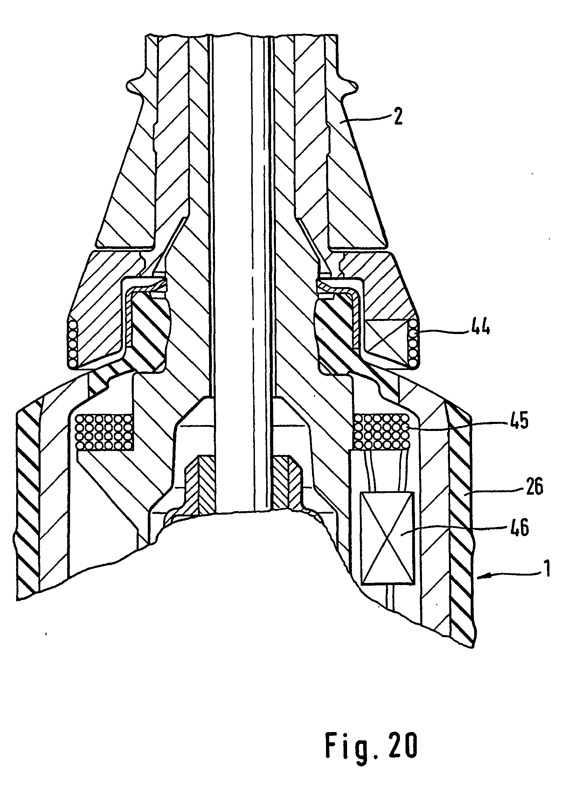

Figuren 18 bis 20 zeigen ein weitere Ausführung einer elektrischen Zahnbürste, bei der die jeweilige Aufsteckbürste 2 über Funksignale erfaßt bzw. bestimmt wird. Die Aufsteckbürste 2 ist mit einem Transponder 19 versehen, der in Form eines Etiketts als sogenanntes Smartlabel auf die Aufsteckbürste 2 aufgeklebt sein kann (Figur 7). Der Transponder 19 kann vorteilhafterweise auch in dem farbigen Aufsteckring 8 an der Stirnseite der Aufsteckbürste 2 enthalten sein (vgl. Figuren 18a und 20). In dem Handteil 1 ist ein auf den Transponder 19 abgestimmter Detektor 20 vorgesehen, der sowohl als Signalsender als auch als Signalempfänger dient. Der Detektor 20 im Handteil 1 sendet zunächst über die Spule 45 elektromagnetische Wellen zu der mit dem Transponder 19 verbundenen Spule 44 aus, um den Transponder 19 bzw. dessen Mikrochip mit Energie zu versorgen. Dieser speichert die Energie und sendet eine spezifische Kennung an den Detektor 20 zurück, der diese aufnimmt, mittels seiner Auswerteelektronik 46 identifiziert und ein entsprechendes Signal an die Steuereinrichtung 27 des Handteils 1 abgibt. Die Spulen 44 und 45 dienen also jeweils sowohl als Sende- als auch als Empfangsteil. Sie sind einander gegenüberliegend jeweils an den Stirnseiten der Aufsteckbürste 2 bzw. des Handteils 1 angeordnet (vgl. Fig. 20). Aufgrund der von dem Transponder 19 zurückgesandten Kennung kann die Aufsteckbürste 2 und damit der zugehörige Benutzer identifiziert werden.

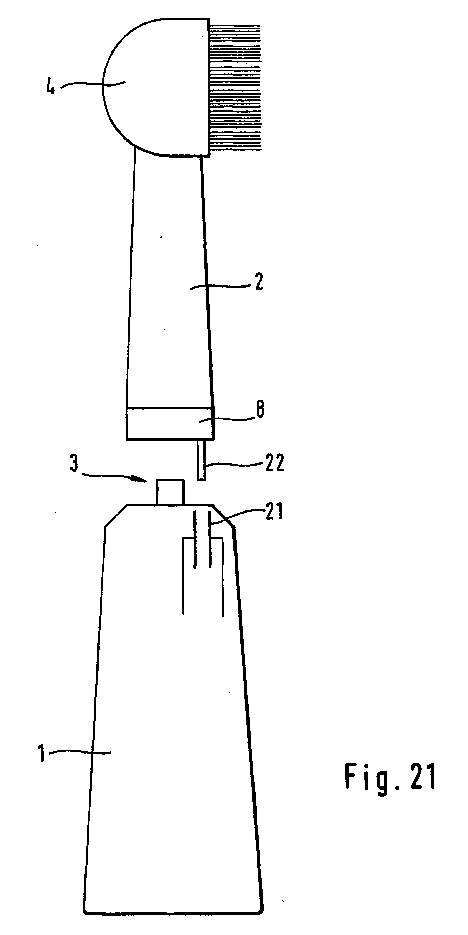

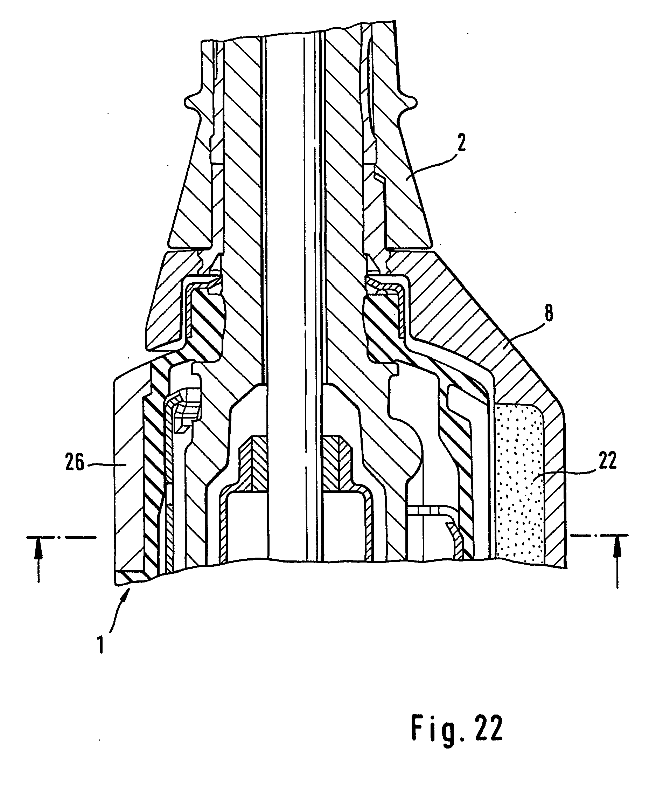

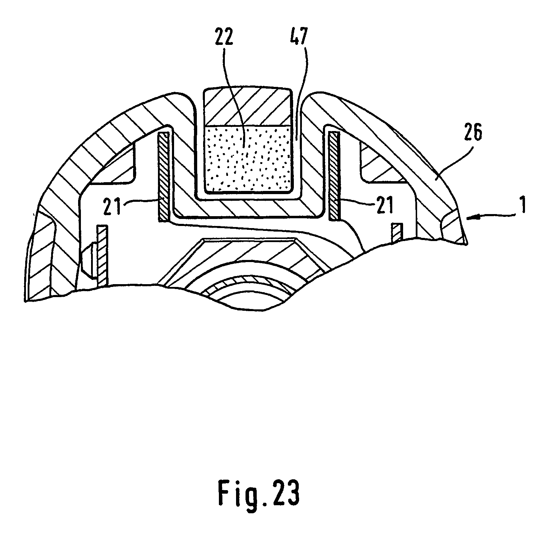

Bei der in den Figuren 21, 22 und 23 gezeigten Ausführungsform einer elektrischen Zahnbürste erfolgt die Identifizierung der Aufsteckbürste 2 kapazitiv. In dem Handteil 1 sind zwei oder auch mehrere Kondensatorplatten 21 vorgesehen, zwischen die ein Dielektrikum 22 eingeschoben werden kann, um die Kapazität des von den Kondensatorplatten 21 gebildeten Kondensators zu verändern. Das Dielektrikum 22 ist stirnseitig an der Aufsteckbürste 2 angeordnet, insbesondere kann es Teil eines auf die Aufsteckbürste 2 aufsteckbaren Aufsteckringes 8 sein. Der dielektrische Abschnitt 22 erstreckt sich vorzugsweise etwa parallel zur Längsachse der Aufsteckbürste etwa mantelflächenparallel. In dem Handteil ist in der Mantelfläche des Gehäuses 26 eine zur Stirnseite hin offene Einbuchtung 47 in Form einer längsparallelen Nut vorgesehen, in die der dielektrische Abschnitt 22 der Aufsteckbürste beim Aufstecken auf das Handteil 1 eintauchen kann. Die Kondensatorplatten 21 liegen im Inneren des Gehäuses 26 zu beiden Seiten der genannten Einbuchtung, so daß das Dielektrikum zwischen den Kondensatorplatten zu liegen kommt. Durch verschiedene Dielektrika können die Aufsteckbürsten 2 individuell codiert werden. Je nach Kapazität bzw. je nach Veränderung der Kapazität durch die unterschiedlichen Dielektrika kann die entsprechende Aufsteckbürste 2 und damit der zugeordnete Benutzer erkannt werden. Bei Anordnung mehrerer Kondensatoren kann eine Codierung auch durch die Anordnung und/oder Anzahl der Dielektrika erreicht werden.

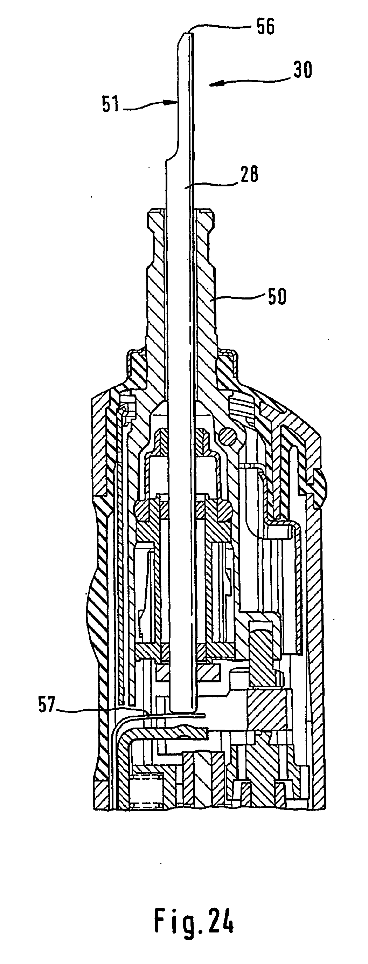

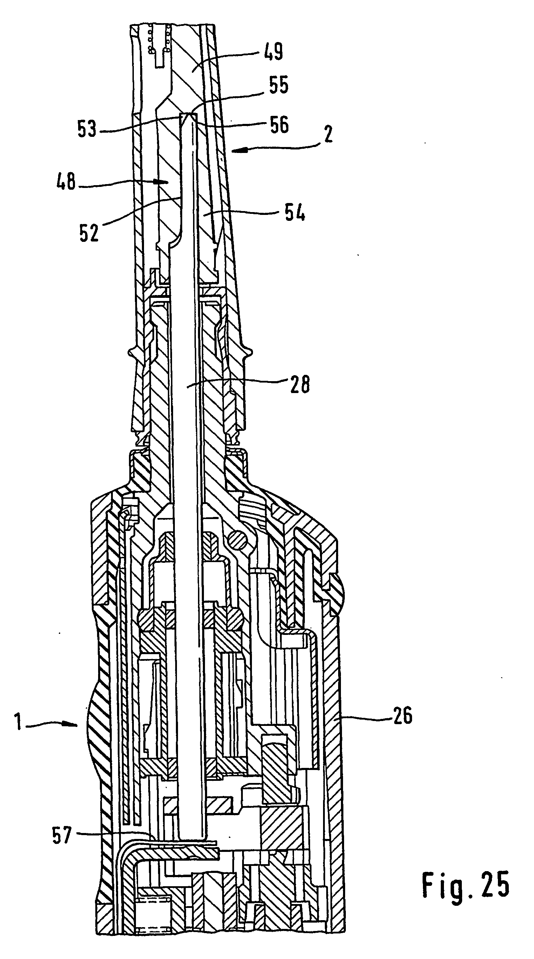

In den Figuren 24 und 25 ist eine spezielle Ausführung der Erfindung mit mechanisch bzw. durch Form codierter Aufsteckbürste und mechanischer Erfassung dieser Codierung dargestellt. Die Codierung der Aufsteckbürste ist Teil deren Kupplungsabschnitts 48, mit dem der bürstenseitige Antriebsstrang 49 mit der handteilseitigen Antriebswelle 28, genauer gesagt mit deren Kupplungsabschnitt 30 gekuppelt wird. Wie Figur 25 zeigt, wird der Korpus der Aufsteckbürste auf eine Bürstenaufnahme 50 des Handteils 1 paßgenau aufgeschoben, so daß die Aufsteckbürste fest auf dem Handteil 1 sitzt. Mittels Rastnasen und entsprechender Ausnehmungen erfolgt dabei eine formschlüssige Sicherung der Aufsteckbürste an dem Handteil bzw. deren Bürstenaufnahme. Die Axialsicherung kann auch durch Reib- oder Kraftschluß bewerkstelligt werden. Beim Aufschieben der Aufsteckbürste gelangen auch die Kupplungsabschnitte 48 und 30 im Antriebsstrang in Eingriff miteinander. Die Kupplungsabschnitte werden von einem Wellenstumpf und einer komplementären Ausnehmung in Form eines Sacklochs im gegenüberliegeneden Wellenende gebildet, so daß der Wellenstumpf paßgenau in die sacklochförmige Wellenbohrung einschiebbar ist. Die Drehmomentübertragung erfolgt vorzugsweise formschlüssig.

Die Kupplungsabschnitte besitzen zueinander komplementäre Passflächen 51 und 52, vorzugsweise in Form einer Wellenabflachung der Antriebswelle 28 und einer entsprechenden Bohrungssekantenfläche in der Ausnehmung 53 des bürstenseitigen Antriebswellenabschnitts 54. Es kann auch eine Keilnut oder ein Keilwellenprofil zur Drehmomentübertragung vorgesehen sein.

Als Codierung besitzt die Aufsteckbürste, insbesondere der Kupplungsabschnitt 48 eine Betätigungsfläche 55, die im angekuppelten Zustand mit einer zugeordneten Eingriffsfläche an dem Handteil 1, insbesondere an dessen Kupplungsabschitt 30 an der Antriebswelle 28 in Anlage ist. Die Betätigungsfläche 55 ist derart auf die Eingriffsfläche 56 abgestimmt, daß eine vorbestimmte Wechselwirkung zwischen diesen beiden Flächen im angekuppelten Zustand eintritt. Insbesondere ist die Betätigungsfläche 55 derart angeordnet und ausgerichtet, daß sie auf die Eingriffsfläche 56 einen vorbestimmten Druck ausübt. Um die Ausbildung der Betätigungsfläche 55 lesen bzw. abtasten zu können, ist die zugeordnete Eingriffsfläche 56 an einem beweglichen Tastglied ausgebildet, so daß als Wechselwirkung eine vorbestimmte Bewegung des Tastglieds erzeugt wird. Grundsätzlich wäre auch eine Kraftmessung möglich, eine Bewegung erlaubt jedoch eine einfachere Erfassung. Unterschiedliche Ausbildungen der Betätigungsflächen 55 werden in unterschiedliche Bewegungen der zugeordneten Eingriffsfläche 56 bzw. des Tastglieds umgesetzt.

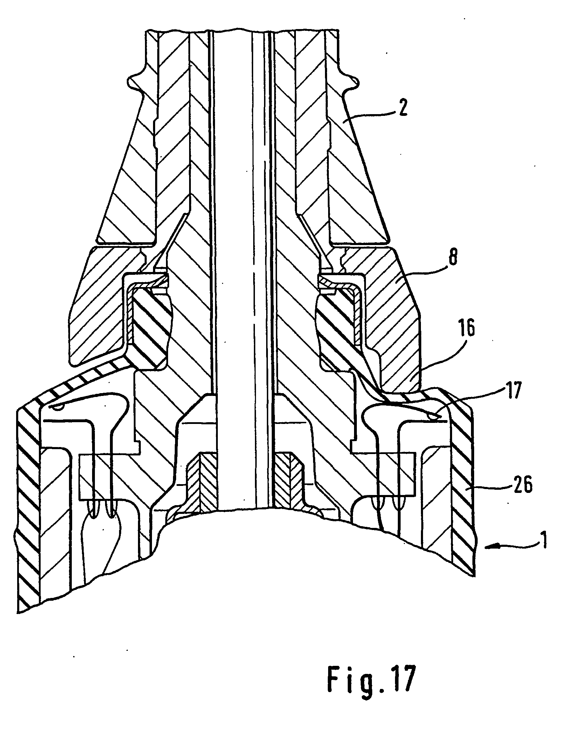

Als Tastglied dient vorteilhafterweise die Antriebswelle 28 des Handteils. Diese ist längsverschieblich gelagert und vorzugsweise mittels Vorspannmitteln aus dem Handteil heraus vorgespannt. Die Betätigungsfläche 55 der Aufsteckbürste 2 drückt bei deren Aufsetzen auf das Handteil die Antriebswelle 28 eine vorbestimmte Wegstrecke in das Innere des Handteils 1. Die Verschiebung wird mit einer Bewegungserfassungseinrichtung erfasst, die grundsätzlich verschieden ausgebildet sein, z.B. als Lichtschranke arbeiten kann. Andere Wegmeßvorrichtungen sind möglich. Vorzugsweise kann ein elastisch verformbarer Fühler mit elektromechanischem Kontakt der zuvor in Verbindung mit Figur 17 beschriebenen Art vorgesehen sein. Vorzugsweise sitzt die Antriebswelle 28 mit einem Absatz, bevorzugt mit ihrem dem Kupplungsabschnitt 30 gegenüberliegenden Ende auf dem Fühler 57. Dieser kann gleichzeitig als Vorspannmittel dienen. Bei Niederdrücken der Antriebswelle 28 erzeugt der Fühler ein entsprechendes Signal, insbesondere öffnet oder schließt er einen entsprechenden Kontakt. Bei entsprechender Ausbildung des Sensors bzw. Fühlers oder mehreren Fühlern kann die Codierung der Aufsteckbürste gelesen werden.

Wie Figur 25 zeigt, wird die Betätigungsfläche 55 von der Bodenfläche der sacklochförmigen Ausnehmung 53 in der bürstenseitigen Antriebswelle gebildet. Die zugeordnete Eingriffsfläche wird von der Stirnfläche der Antriebswelle 28 gebildet. Die Anordnung ist umkehrbar, jedoch vorzugsweise in der gezeichneten Ausführung ausgebildet.

Alternative Ausführungen der Betätigungs- und Eingriffsflächen 55 bzw. 56 sind möglich. Es können in Weiterbildung der Erfindung konische Passflächen vorgesehen sein. Andere Gestaltungen sind ebenfalls möglich.

## Patentansprüche

1. Handteil (1) einer elektrischen Zahnputzvorrichtung (1, 2), mit einem Kupplungsteil zur Ankupplung von Putzwerkzeugen (2), insbesondere Aufsatzbürsten, sowie einem Antrieb (23) zum Antreiben des jeweils angekuppelten Putzwerkzeugs, wobei eine Codierungs-Erfassungseinrichtung (5) zur Erfassung einer Codierung des jeweils an dem Handteil befindlichen Putzwerkzeugs (2) vorgesehen ist, **gekennzeichnet durch** eine Steuereinrichtung (27) zur Steuerung zumindest eines Zahnreinigungsparameters der Zahnputzvorichtung in Abhängigkeit der erfaßten Codierung, wobei die Codierung personenspezifische und/oder reinigungswerkzeugspezifische Daten umfaßt und wenigstens einer der Zahnreinigungsparameter Putzfrequenz oder Putzgeschwindigkeit oder Anpreßdruck oder Anpreßdruckschwellwert oder Anpreßdrucksollwertbereich gesteuert oder erfaßt wird.

2. Handteil nach Anspruch 1, **dadurch gekennzeichnet, daß** eine Dateneinrichtung zur Erfassung, Speicherung, Verarbeitung und/oder Anzeige von Zahnreinigungsdaten vorgesehen ist.

3. Handteil nach Anspruch 2, **dadurch gekennzeichnet, daß** die Steuereinrichtung Steuermittel zur Steuerung der Dateneinrichtung in Abhängigkeit der erfaßten Codierung besitzt.

4. Handteil nach einem der vorhergehenden Ansprüche 1 bis 3, wobei die Codierungs-Erfassungseinrichtung (5) berührungslos arbeitend ausgebildet ist.

5. Handteil nach einem der Ansprüche 1 bis 3, wobei die Codierungs-Erfassungseinrichtung (5) mechanisch betätigbar ist.

6. Handteil nach einem der vorhergehenden Ansprüche 1 bis 5, wobei die Codierungs-Erfassungseinrichtung (5) zumindest einen bewegbaren und/oder elastisch verformbaren Kontakt (17) oder dergleichen Fühler aufweist, der von einer Codierung eines Putzwerkzeugs (2) bewegbar und/oder verformbar ist und ein seiner Bewegung und/oder Verformung entsprechendes Signal erzeugt.

7. Handteil nach Anspruch 6, wobei der Kontakt (17) oder Fühler als elektrisches Kontaktorgan ausgebildet ist.

8. Handteil nach einem der vorhergehenden Ansprüche 1 bis 7, wobei ein Tastglied beweglich, vorzugsweise verschieblich gelagert ist und eine Eingriffsfläche (56) zum Eingriff mit einer entsprechenden Betätigungsfläche (55) eines Putzwerkzeugs (2) besitzt.

9. Handteil nach Anspruch 8, **dadurch gekennzeichnet, daß** die Eingriffsfläche derart an die Betätigungsfläche des Putzwerkzeugs (2) angepaßt ist, daß bei Ankuppeln des Putzwerkzeugs (2) an das Handteil das Tastglied um ein von der Betätigungsfläche bestimmtes Maß bewegt wird.

10. Handteil nach Anspruch 8 oder 9, **dadurch gekennzeichnet, daß** die Codierungs-Erfassungseinrichtung eine Bewegungs-Erfassungseinrichtung (17; 57) zur Erfassung der Bewegung des Tastglieds besitzt.

11. Handteil nach einem der vorhergehenden Ansprüche 8 bis 10, wobei das Tastglied von einer vorzugsweise längsverschieblich gelagerten Antriebswelle (28) gebildet wird.

12. Handteil nach einem der vorhergehenden Ansprüche 10 oder 11, wobei als Bewegungs-Erfassungseinrichtung ein Fühler (57) nach Anspruch 6 oder 7 vorgesehen ist.

13. Handteil nach einem der vorhergehenden Ansprüche 1 bis 12, wobei die Codierungs-Erfassungseinrichtung einen Signalempfänger (20) zum Empfang eines Codiersignals von dem Putzwerkzeug (2) und/oder einen Signalsender (20) zum Senden eines Signals, insbesondere eines Abfrage- oder Aktivierungssignals, an das jeweils angekuppelte Putzwerkzeug (2) aufweist.

14. Handteil nach einem der vorhergehenden Ansprüche 1 bis 13, wobei die Codierungs-Erfassungseinrichtung (5) eine optische Erfassungseinrichtung (12; 13; 15) zur Erfassung einer optischen Codierung (7) des jeweils angekuppelten Putzwerkzeugs (2) aufweist.

15. Handteil nach einem der vorhergehenden Ansprüche 1 bis 14, wobei die Codierungs-Erfassungseinrichtung (5) eine magnetische Erfassungseinrichtung (6; 9; 10) zur Erfassung einer magnetischen Codierung (7) des jeweils angekuppelten Putzwerkzeugs (2) aufweist.

16. Handteil nach einem der vorhergehenden Ansprüche 1 bis 15, wobei die Codierungs-Erfassungseinrichtung (5) eine Erfassungseinrichtung (9), insbesondere einen LC-Oszillator, zur Erfassung einer metallischen und/oder magnetischen Codierung (7) des jeweils angekuppelten Putzwerkzeugs (2) aufweist.

17. Handteil nach einem der vorhergehenden Ansprüche 1 bis 16, wobei die Codierungs-Erfassungseinrichtung (5) eine kapazitive Erfassungseinrichtung (21) zur Erfassung einer kapazitiven Codierung (7) des jeweils angekoppelten Putzwerkzeugs (2) aufweist.

18. Handteil nach einem der vorhergehenden Ansprüche 1 bis 17, wobei die Codierungs-Erfassungseinrichtung (5) eine elektrische oder elektromagnetische Erfassungseinrichtung zur Erfassung einer elektrischen oder elektromagnetischen Codierung des jeweils angekoppelten Putzwerkzeugs (2) aufweist.

19. Handteil nach einem der vorhergehenden Ansprüche, wobei ein Aktivierungsschalter zur Aktivierung der Codierungs-Erfassungseinrichtung vorgesehen ist, wobei der Aktivierungsschalter vorzugsweise durch einen Schalter zum Ingangsetzen des Handstücks gebildet wird.

20. Handteil nach Anspruch 19, **dadurch gekennzeichnet, daß** bei Einschalten des Aktivierungsschalters zunächst die Codierungs-Erfassungseinrichtung und dann nach Erkennen des Putzwerkzeuges (2) das Handstück in Gang gesetzt wird.

21. Handteil nach einem der vorhergehenden Ansprüche 1 bis 20, wobei die Codierungs-Erfassungseinrichtung (5) in einem geschlossen, insbesondere fluiddichten Handteilgehäuse (26) angeordnet ist.

22. Putzwerkzeug, insbesondere Aufsatzbürste, mit einem Kupplungsteil zum Ankuppeln an ein Handteil (1) mit einer Steuereinrichtung (27) bevorzugt nach einem der vorhergehenden Ansprüche 1 bis 21 und mit einer Codierung, **dadurch gekennzeichnet, daß** die Codierung personenspezifische und/oder reinigungswerkzeugspezifische Daten umfaßt und mittels dieser personenspezifischen und/oder reinigungswerkzeugspezifischen Daten wenigstens einer der Zahnreinigungsparameter Putzfrequenz oder Putzgeschwindigkeit oder Anpreßdruck oder Anpreßdruckschwellwert oder Anpreßdrucksollwertbereich steuerbar oder erfaßbar ist, wobei das Putzwerkzeug (2) einen Transponder (19) und eine damit verbundene Spule (44) aufweist, die als Sende- und Empfangsteil dient.

23. Putzwerkzeug nach Anspruch 22, wobei eine Codiereinrichtung den Signalempfänger (19; 14) zum Empfang eines Signals von dem Handteil (1) und den Signalsender (19; 14) zum Senden eines codierten Signals an das Handteil (2) aufweist.

24. Putzwerkzeug nach Anspruch 22 oder 23, wobei zwischen den Signalempfänger (44) und den Signalsender (44) geschaltete Codiermittel zur Codierung des empfangenen Signals vorgesehen sind.

25. Putzwerkzeug nach einem der vorhergehenden Ansprüche 22 bis 24, wobei die Codiereinrichtung (7) integraler Bestandteil des Putzwerkzeugkorpus ist.

26. Putzwerkzeug nach einem der vorhergehenden Ansprüche 22 bis 25, wobei die Codiereinrichtung (7) mit dem Putzwerkzeugkorpus vorzugsweise lösbar verbunden ist.

27. Putzwerkzeug nach einem der vorhergehenden Ansprüche 22 bis 26, wobei die Codiereinrichtung in einen Ring (8) integriert ist, der an einer kupplungsseitigen Stirnseite des Putzwerkzeugs angeordnet, vorzugsweise formschlüssig auf den Putzwerkzeugkorpus aufschnappbar ist.

28. Elektrische Zahnputzvorrichtung, insbesondere Zahnbürste, mit einem Handteil (1) nach einem der vorhergehenden Ansprüche 1 bis 21 in Kombination mit einem daran ankuppelbaren Putzwerkzeug (2) nach einem der vorhergehenden Ansprüche 22 bis 27.

## Claims

1. Handpiece (1) of an electrical tooth cleaning apparatus (1, 2) having a coupling part for coupling of cleaning tools (2), in particular brush attachments, and having a driver (23) for driving the respectively coupled cleaning tool, with a coding detection device (5) being provided in order to detect a coding of the respective cleaning tool (2) located on the handpiece, **characterized by** a control device (27) for controlling at least one tooth cleaning parameter of the tooth cleaning apparatus as a function of the detected coding, with the coding comprising person-specific and/or cleaning-tool-specific data, and with at least one of the tooth cleaning parameters including the cleaning frequency, cleaning speed, contact pressure, contact pressure threshold value or contact pressure nominal value range, being controlled or detected.

2. Handpiece according to Claim 1, **characterized in that** a data device is provided for detection, storage, processing and/or indication of tooth cleaning data.

3. Handpiece according to Claim 2, **characterized in that** the control device has control means for controlling the data device as a function of the detected coding.

4. Handpiece according to one of the preceding Claims 1 to 3, with the coding detection device (5) being designed to operate without making contact.

5. Handpiece according to one of Claims 1 to 3, with the coding detection device (5) being mechanically operable.

6. Handpiece according to one of the preceding Claims 1 to 5, with the coding detection device (5) having at least one movable and/or elastically deformable contact (17) or a sensor of this kind, which can be moved and/or deformed by a coding of a cleaning tool (2), and produces a signal which corresponds to its movement and/or deformation.

7. Handpiece according to Claim 6, with the contact (17) or sensor being in the form of an electrical contact member.

8. Handpiece according to one of the preceding Claims 1 to 7, with a probe element being mounted such that it can move, preferably such that it can move linearly, and having an engagement surface (56) for engagement with a corresponding operating surface (55) of a cleaning tool (2).

9. Handpiece according to Claim 8, **characterized in that** the engagement surface is matched to the operating surface of the cleaning tool (2) such that, when the cleaning tool (2) is being coupled to the handpiece, the probe element is moved through a distance which is governed by the operating surface.

10. Handpiece according to Claim 8 or 9, **characterized in that** the coding detection device has a movement detection device (17; 57) for detection of the movement of the probe element.

11. Handpiece according to one of the preceding Claims 8 to 10, with the probe element being formed by a drive shaft (28) which is preferably mounted such that it can be moved longitudinally.

12. Handpiece according to one of the preceding Claims 10 or 11, with a sensor (57) according to Claim 6 or 7 being provided as the movement detection device.

13. Handpiece according to one of the preceding Claims 1 to 12, with the coding detection device having a signal receiver (20) for reception of a coding signal from the cleaning tool (2), and/or having a signal transmitter (20) for transmission of a signal, in particular of a checking or activation signal, to the respectively coupled cleaning tool (2).

14. Handpiece according to one of the preceding Claims 1 to 13, with the coding detection device (5) having an optical detection device (12; 13; 15) for detection of an optical coding (7) for the respectively coupled cleaning tool (2).

15. Handpiece according to one of the preceding Claims 1 to 14, with the coding detection device (5) having a magnetic detection device (6; 9; 10) for detection of a magnetic coding (7) of the respectively coupled cleaning tool (2).

16. Handpiece according to one of the preceding Claims 1 to 15, with the coding detection device (5) having a detection device (9), in particular an LC oscillator, for detection of a metallic and/or magnetic coding (7) of the respectively coupled cleaning tool (2).

17. Handpiece according to one of the preceding Claims 1 to 16, with the coding detection device (5) having a capacitive detection device (21) for detection of a capacitive coding (7) of the respectively coupled cleaning tool (2).

18. Handpiece according to one of the preceding Claims 1 to 17, with the coding detection device (5) having an electrical or electromagnetic detection device for detection of an electrical or electromagnetic coding of the respectively coupled cleaning tool.

19. Handpiece according to one of the preceding claims, with an activation switch being provided for activation of the coding detection device, and with the activation switch preferably being formed by a switch for starting the handpiece.

20. Handpiece according to Claim 19, **characterized in that**, when the activation switch is switched on, the coding detection device is started up first of all, followed by the handpiece after identification of the cleaning tool (2).

21. Handpiece according to one of the preceding Claims 1 to 20, with the coding detection device (5) being arranged in a closed, in particular fluid-tight handpiece housing (26).

22. Cleaning tool, in particular a brush attachment, having a coupling part for coupling to a handpiece (1) with a control device (27), preferably according to one of the preceding Claims 1 to 21, and with a coding, **characterized in that** the coding comprises person-specific and/or cleaning-tool-specific data, with at least one of the tooth cleaning parameters including the cleaning frequency, cleaning speed, contact pressure, contact pressure threshold value or contact pressure nominal value range being controlled or detected by means of this person-specific and/or cleaning-tool-specific data, with the cleaning tool (2) having a transponder (19) and a coil (44) which is connected to it and is used as a transmitting and receiving part.

23. Cleaning tool according to Claim 22, with a coding device having the signal receiver (19; 14) for reception of a signal from the handpiece (1), and the signal transmitter (19; 14) for transmission of a coded signal to the handpiece (1).

24. Cleaning tool according to Claim 22 or 23, with coding means connected between the signal receiver (44) and the signal transmitter (44) being provided for coding of the received signal.

25. Cleaning tool according to one of the preceding Claims 22 to 24, with the coding device (7) being an integral component of the cleaning tool body.

26. Cleaning tool according to one of the preceding Claims 22 to 25, with the coding device (7) being connected, preferably detachably, to the cleaning tool body.

27. Cleaning tool according to one of the preceding Claims 22 to 26, with the coding device being integrated in a ring (8), which is arranged on the coupling-side end face of the cleaning tool and can be snapped, preferably in an interlocking manner, onto the cleaning tool body.

28. Electrical tooth cleaning apparatus, in particular a toothbrush, having a handpiece (1) according to one of the preceding Claims 1 to 21, in combination with a cleaning tool (2) which can be coupled to it, according to one of the preceding Claims 22 to 27.

## Revendications

1. Manche (1) d'un dispositif électrique pour le brossage des dents (1, 2), avec une partie de couplage pour le couplage d'instruments de brossage (2), en particulier de brosses amovibles, ainsi qu'avec un entraînement (23) pour entraîner l'instrument de brossage respectif couplé, dans lequel il est prévu un système de détection de codage (5) pour détecter un codage de l'instrument de brossage (2) se trouvant chaque fois sur le manche, **caractérisé par** un système de commande (27) pour commander au moins un paramètre de brossage des dents du dispositif pour le brossage des dents en fonction du codage détecté, dans lequel le codage comprend des données spécifiques à une personne et/ou spécifiques à l'instrument de brossage et dans lequel on commande ou on détecte au moins un des paramètres de brossage des dents, à savoir la fréquence de brossage ou la vitesse de brossage ou la pression d'application ou la valeur de seuil de la pression d'application ou la plage de la valeur de consigne de la pression d'application.

2. Manche selon la revendication 1, **caractérisé en ce qu'**il est prévu un système informatique pour la détection, la mémorisation, le traitement et/ou l'affichage de données de brossage des dents.

3. Manche selon la revendication 2, **caractérisé en ce que** le système de commande comporte des moyens de commande pour commander le système informatique en fonction du codage détecté.

4. Manche selon l'une quelconque des revendications précédentes 1 à 3, **caractérisé en ce que** le système de détection de codage (5) est conçu pour travailler sans contact.

5. Manche selon l'une quelconque des revendications 1 à 3, **caractérisé en ce que** le système de détection de codage (5) peut être actionné mécaniquement.

6. Manche selon l'une quelconque des revendications précédentes 1 à 5, dans lequel le système de détection de codage (5) comprend au moins un contact (17) mobile et/ou déformable élastiquement ou un détecteur analogue, qui est déplaçable et/ou déformable par un codage d'un instrument de brossage (2) et qui produit un signal correspondant à son déplacement et/ou à sa déformation.

7. Manche selon la revendication 6, dans lequel le contact (17) ou le détecteur est un organe de contact électrique.

8. Manche selon l'une quelconque des revendications précédentes 1 à 7, dans lequel un palpeur est mobile, de préférence coulissant, et présente une surface de contact (56) permettant de contacter une surface d'actionnement correspondante (55) d'un instrument de brossage (2).

9. Manche selon la revendication 8, **caractérisé en ce que** la surface de contact est adaptée à la surface d'actionnement de l'instrument de brossage (2) de telle manière que, lors du couplage de l'instrument de brossage (2) sur le manche, le palpeur soit déplacé dans une mesure déterminée par la surface d'actionnement.

10. Manche selon la revendication 8 ou 9, **caractérisé en ce que** le système de détection de codage comprend un système de détection de déplacement (17; 57) pour détecter le déplacement du palpeur.

11. Manche selon l'une quelconque des revendications précédentes 8 à 10, dans lequel le palpeur est formé par un arbre d'entraînement (28) de préférence coulissant longitudinalement.

12. Manche selon une des revendications précédentes 10 ou 11, dans lequel il est prévu un détecteur (57) selon la revendication 6 ou 7 comme système de détection de déplacement.

13. Manche selon l'une quelconque des revendications précédentes 1 à 12, dans lequel le système de détection de codage comprend un récepteur de signal (20) pour recevoir un signal de codage de l'instrument de brossage (2) et/ou un émetteur de signal (20) pour envoyer un signal, en particulier un signal d'interrogation ou d'activation, à l'instrument de brossage (2) respectivement couplé.

14. Manche selon l'une quelconque des revendications précédentes 1 à 13, dans lequel le système de détection de codage (5) comprend un système de détection optique (12; 13; 15) pour détecter un codage optique (7) de l'instrument de brossage (2) respectivement couplé.

15. Manche selon l'une quelconque des revendications précédentes 1 à 14, dans lequel le système de détection de codage (5) comprend un système de détection magnétique (6; 9; 10) pour détecter un codage magnétique (7) de l'instrument de brossage (2) respectivement couplé.

16. Manche selon l'une quelconque des revendications précédentes 1 à 15, dans lequel le système de détection de codage (5) comprend un système de détection (9), en particulier un oscillateur LC, pour détecter un codage métallique et/ou magnétique (7) de l'instrument de brossage (2) respectivement couplé.

17. Manche selon l'une quelconque des revendications précédentes 1 à 16, dans lequel le système de détection de codage (5) comprend un système de détection capacitif (21) pour détecter un codage capacitif (7) de l'instrument de brossage (2) respectivement couplé.

18. Manche selon l'une quelconque des revendications précédentes 1 à 17, dans lequel le système de détection de codage (5) comprend un système de détection électrique ou électromagnétique pour détecter un codage électrique ou électromagnétique de l'instrument de brossage (2) respectivement couplé.

19. Manche selon l'une quelconque des revendications précédentes, dans lequel il est prévu un commutateur d'activation pour activer le système de détection de codage, dans lequel le commutateur d'activation est formé de préférence par un interrupteur pour la mise en marche de l'instrument à main.

20. Manche selon la revendication 19, **caractérisé en ce que**, lorsque l'on enclenche le commutateur d'activation, on met en marche d'abord le système de détection de codage et ensuite l'appareil à main, après reconnaissance de l'instrument de brossage (2).

21. Manche selon l'une quelconque des revendications précédentes 1 à 20, dans lequel le système de détection de codage (5) est disposé dans un boîtier fermé (26) du manche, en particulier étanche aux fluides.

22. Instrument de brossage, en particulier brosse amovible, avec une partie de couplage pour le couplage à un manche (1) avec un système de commande (27) de préférence selon l'une quelconque des revendications précédentes 1 à 21 et avec un codage, **caractérisé en ce que** le codage contient des données spécifiques à une personne et/ou spécifiques à l'instrument de brossage et au moins un des paramètres de brossage des dents, à savoir la fréquence de brossage ou la vitesse de brossage ou la pression d'application ou la valeur de seuil de la pression d'application ou la plage de la valeur de consigne de la pression d'application peut être commandé ou détecté au moyen de ces données spécifiques à une personne et/ou spécifiques à l'instrument de brossage, dans lequel l'instrument de brossage (2) comporte un transpondeur (19) et une bobine (44) reliée à celui-ci, qui sert de partie d'émission et de réception.

23. Instrument de brossage selon la revendication 22, dans lequel un système de codage comprend le récepteur de signal (19; 14) pour recevoir un signal du manche (1) et l'émetteur de signal (19; 14) pour envoyer un signal codé au manche (1).

24. Instrument de brossage selon la revendication 22 ou 23, dans lequel il est prévu des moyens de codage montés entre le récepteur de signal (44) et l'émetteur de signal (44) pour coder le signal reçu.

25. Instrument de brossage selon l'une quelconque des revendications précédentes 22 à 24, dans lequel le système de codage (7) fait partie intégrante du corps de l'instrument de brossage.

26. Instrument de brossage selon l'une quelconque des revendications précédentes 22 à 25, dans lequel le système de codage (7) est assemblé au corps de l'instrument de brossage, de préférence de façon amovible.

27. Instrument de brossage selon l'une quelconque des revendications précédentes 22 à 26, dans lequel le système de codage est intégré dans une bague (8), qui est disposée sur une face frontale côté couplage de l'instrument de brossage, et est de préférence emboîtable en complémentarité de forme sur le corps de l'instrument de brossage.

28. Dispositif électrique pour le brossage des dents, en particulier brosse à dents, avec un manche (1) selon l'une quelconque des revendications précédentes 1 à 21 en combinaison avec un instrument de brossage (2) selon l'une quelconque des revendications précédentes 22 à 27, pouvant être couplé à celui-ci.
